# EUROPEAN PATENT APPLICATION

(11) **EP 4 811 125 A1**
(43) Date of publication of application: **23.09.2026**
(21) Application number: 24909822.9
(22) Date of filing: 13.08.2024
(51) Int. Cl.: G06F 9/445, G06F 9/451

(54) **APPLICATION LAUNCHING METHOD AND ELECTRONIC DEVICE**

(30) Priority: 29.12.2023 CN 202311867730
(71) Applicant: Honor Device Co., Ltd., Shenzhen, Guangdong 518040 (CN)
(72) Inventor: CHEN, Chuanfu, Shenzhen, Guangdong 518040 (CN); SUN, Wenyong, Shenzhen, Guangdong 518040 (CN); XIN, Zhenwen, Shenzhen, Guangdong 518040 (CN)
(74) Representative: Isarpatent
(86) International application number: PCT/CN2024/111729
(87) International publication number: WO 2025/138871

(57) **Abstract**

Embodiments of this application provide an application starting method and an electronic device. The method is applied to the electronic device. The electronic device includes a system service process, a system interface process, and a home screen process. The method includes: In response to a first operation of a user, the home screen process sends a starting message to the system service process, where the starting message indicates to start a first function of a first application in a shortcut manner, and an interface corresponding to the first function is an interface displayed after the first application successively loads n activities. In response to the starting message, the system service process starts a first activity of the n activities, and creates a first transition component, where the system interface process adds and draws a first starting window for the first activity in a process of starting the first activity. In response to readiness of the first transition component, the system interface process notifies the home screen process to execute the first transition component. The home screen process executes the first transition component. According to the method, a response speed when an application is started can be increased.

## Description

This application claims priority to Chinese Patent Application No. 202311867730.7, filed with the China National Intellectual Property Administration on December 29, 2023 and entitled "APPLICATION STARTING METHOD AND ELECTRONIC DEVICE", which is incorporated herein by reference in its entirety.

### TECHNICAL FIELD

This application relates to the field of electronic technologies, and specifically, to an application starting method and an electronic device.

### BACKGROUND

With the development of electronic devices, there are more types of application programs (application, APP, application for short) that can be installed in the electronic devices, and functions in the applications are also increasingly abundant.

A user can start an application by tapping an icon on a home screen. To provide the user with an effect of one step to launch, some applications provide a quick starting manner. For example, the user touches and holds an application icon on the home screen, and the home screen may display some function options of the application. Tapping a function option can directly start the function of the application. This process is quick starting of the application.

However, during quick starting of some applications, a problem of slow starting response occurs, affecting user experience.

### SUMMARY

This application provides an application starting method and an electronic device, so as to shorten a response time of quick starting of an application and improve user experience.

According to a first aspect, this application provides an application starting method, applied to an electronic device, where the electronic device includes a system service process, a system interface process, and a home screen process. The method includes: In response to a first operation of a user, the home screen process sends a starting message to the system service process, where the starting message is used to indicate to start a first function of a first application in a shortcut manner, an interface corresponding to the first function is an interface displayed after the first application successively loads n activities, and n is an integer greater than 1. In response to the starting message, the system service process starts a first activity of the n activities, and creates a first transition component, where the system interface process adds and draws a first starting window for the first activity in a process of starting the first activity. In response to readiness of the first transition component, the system interface process notifies the home screen process to execute the first transition component. In response to the notification of the system interface process, the home screen process executes the first transition component.

Optionally, the readiness of the transition component may be implemented by using an onTransactionReady() function, which is also referred to as transitionReady.

According to the application starting method provided in the first aspect of this application, in the process of starting the first activity, the system interface process adds and draws the first starting window for the first activity. In addition, the system service process creates the first transition component, and after processing performed the system interface process and the home screen process, finally executes the first transition component to display a transition page. An entire process of adding the first starting window and displaying the transition page is performed in synchronization with executing a lifecycle of an activity by a process of the first application, without depending on a lifecycle of the first application, thereby greatly shortening a response time. In addition, in this solution, the first starting window is added earlier, so that the transition component starts to be executed earlier, and the execution of the transition component can be performed concurrently with the process in which the first application executes the lifecycle of the activity. Therefore, the execution of the transition component can be completed earlier, and a user operation can be responded when loading of the activity of the application is completed and an interface starts to be displayed, and the user does not need to wait, thereby improving user experience.

In a possible implementation, a moment at which the first transition component is ready is between a first moment and a second moment, the first moment is a moment at which the first starting window is added, and the second moment is a moment at which drawing of the first starting window is completed.

In other words, the readiness of the first transition component is not necessarily triggered by completion of drawing (finishDrawing) of the first starting window, and instead, the readiness (onTransactionReady) of the first transition component may be triggered during the drawing of the first starting window. In this way, the moment at which the first transition component is ready is advanced, so that a time point at which the transition page is displayed can be further advanced, thereby further shortening a response time for application starting, and further improving user experience.

In a possible implementation, the system interface process adding and drawing a first starting window for the first activity includes: The system interface process invokes an addStartingWindow() function to add the first starting window. The system interface process invokes a doFrame() function to draw a frame of the first starting window. The system interface process requests, after the drawing of the frame of the first starting window is completed, the system service process to add display for the first starting window. The system service process invokes an addToDisplay() function to add display for the first starting window. The system service process triggers the readiness of the first transition component after adding display for the first starting window is completed.

In this implementation, the readiness of the first transition component is triggered when the system service process completes the execution of addToDisplay(), that is, when adding display for the first starting window is completed, so that the moment at which the first transition component is ready is advanced, and a time point at which the transition page is displayed is advanced, thereby further shortening a response time for application starting, and further improving user experience.

In a possible implementation, the starting message carries information about the first application, and before the system service process starts the first activity of the n activities, the method further includes: If it is determined that the starting message carries first information, the system service process determines, based on the information about the first application, whether the first application meets a preset condition, where the first information is used to indicate to start the first function in a shortcut manner. If it is determined that the first application meets the preset condition, the system service process sets a first identifier, where the first identifier is used to indicate that a current scenario is a quick starting scenario, and a currently started activity is the first activity of the application.

The first identifier may be, for example, a shortcut function ID.

In this implementation, before the first activity is started, it is determined whether the first application meets the preset condition, so as to determine whether the quick starting scenario is met. If the preset condition is met, it indicates that the current scenario is the quick starting scenario, and the first identifier is set. In addition, in this solution, the first identifier may be set only before the first activity is started. Therefore, the first identifier can also indicate that the current to-be-started activity is the first activity. The first identifier is set, so that the quick starting scenario and the first activity are subsequently identified quickly and accurately based on the first identifier. In this way, a subsequent procedure of this solution can be more accurately executed, and efficiency and accuracy of system running can be improved.

In a possible implementation, the preset condition includes one or more of the following: a type of the first application is in a preset application whitelist; a package of the first application is not in a preset package blacklist; the first information is not in a function blacklist.

In this implementation, an application type whitelist and a package blacklist are set, so that applications that are not applicable to the procedure of this solution can be filtered out, thereby preventing these applications from entering the procedure of this solution and thus preventing incapability of execution, and further preventing a failure of application starting. In other words, in this manner, reliability and stability of system running are improved.

In a possible implementation, the first identifier is the first information.

In other words, the first information carried in the starting message may be directly used to identify that the current scenario is the quick starting scenario and the currently started activity is the first activity of the application. In this way, a quantity of identifiers can be reduced, an algorithm can be simplified, and efficiency of system running can be improved.

In a possible implementation, before the system interface process adds and draws the first starting window for the first activity, the method further includes: The system service process determines that the first identifier exists.

To be specific, the system service process reads the first identifier. If the first identifier is obtained through reading, it indicates that the current scenario is the quick starting scenario, and the currently started activity is the first activity of the application. Therefore, the system interface process adds and draws the first starting window for the first activity. In this way, addition and drawing of the first starting window can be further limited to the process of starting the first activity in the quick starting scenario, thereby improving accuracy of adding a starting window, and further improving accuracy and stability of application starting.

In a possible implementation, the method further includes: After the system interface process starts to add the first starting window to the first activity, the system service process determines whether a type parameter of the first starting window is a first type, and determines whether the first identifier exists, where the first type represents that no starting window is added. If the type parameter of the first starting window is the first type and the first identifier exists, the system service process sets a second identifier for the first starting window. If the type parameter of the first starting window is not the first type, and the first identifier exists, the system service process determines whether a first result exists, where the first result represents that adding a starting window fails. If the first result exists, the system service process sets the second identifier. If the first result does not exist, the system service process clears the first identifier.

The first type may be, for example, none (NONE).

To be specific, if the type parameter shows that no starting window is added, it indicates that no starting window is added to a native procedure of the system. Further, if the first identifier exists, it indicates that the starting window is added in the procedure of this solution (namely, an optimization procedure). In this case, the system service process sets the second identifier, so as to identify that the first starting window is a starting window added in the procedure of this solution. This helps subsequently identify the starting window quickly and accurately, thereby ensuring subsequent accurate management of the starting window, and improving accuracy, reliability, and stability of the solution. In addition, when the starting window is added in the procedure of this solution, the first identifier is cleared. In this way, a subsequent procedure enters the native procedure of the system, thereby preventing an error in application starting, improving accuracy of executing the procedure of this solution, and further improving stability of system running.

In a possible implementation, the method further includes: If the type parameter of the first starting window is the first type and the first identifier exists, the type parameter of the first starting window is changed to a splash type.

In this implementation, the type parameter of the starting window is corrected to the splash type, thereby improving accuracy of executing a subsequent procedure. In addition, the starting window of the splash type can be not only applicable to hot start, but also applicable to cold start, thereby expanding an applicable scope of this solution.

In a possible implementation, the method further includes: In a process of starting the first activity, if it is determined that the first identifier exists, the system service process creates a first source record corresponding to the first activity, uses an activity record of the first activity as a value of the first source record, and adds the first source record to a source record set.

The first identifier exists, which indicates that the current scenario is the quick starting scenario, and the currently started activity is the first activity. In this case, the first source record corresponding to the first activity is created, a value is assigned to the first source record, and the first source record is added to the source record set. The source record represents a source activity that starts the activity. The source record can be used as a basis for subsequently identifying whether an activity is the first activity or another activity other than the first activity, and can be further used as a basis for transferring a subsequent window, thereby improving accuracy and convenience of executing the procedure of this solution.

In a possible implementation, the electronic device further includes a process of the first application, and the method further includes: In a process of executing a lifecycle of the first activity, the process of the first application determines whether an interface corresponding to the first activity is a visual interface. If the interface corresponding to the first activity is a visual interface, the system service process sets a value of a visual identifier of the first activity to a first value.

The first value may be, for example, "yes" or "true".

In a possible implementation, the method further includes: In an activity layout phase of the first activity, if it is determined that a custom interface includes a view, or it is determined that a background layout exists and transparency is not 0, the process of the first application determines that the interface corresponding to the first activity is a visual interface.

In a possible implementation, the method further includes: After a first completion indication of the process of the first application is received, the system service process determines whether a removal delay condition is met, where the first completion indication is used to indicate that drawing for the first activity is completed. If the removal delay condition is met, the system service process delays removing the first starting window. If the removal delay condition is not met, the system service process removes the first starting window.

Optionally, the first completion indication may be indicated to the system service process by the process of the first application by using a finishDrawing() function.

In a possible implementation, the removal delay condition includes: The value of the visual identifier of the first activity is the first value and the second identifier exists.

In the foregoing several implementations, whether to delay removing the window is determined by identifying whether the interface corresponding to the activity is a visual interface. If the value of the visual identifier is not the first value, and the second identifier exists, it indicates that the interface corresponding to the current activity is an interface that the user cannot perceive, and the first starting window is a starting window added in the procedure of this solution. In this case, the starting window may not need to be removed, and therefore, removal of the starting window is delayed. If the value of the visual identifier is the first value, or the second identifier does not exist, it indicates that the interface corresponding to the current activity is a user-perceivable interface, or the first starting window is not a starting window added in the procedure of this solution. In this case, the starting window is removed. In this way, when the first application needs to display an interface, the starting window can be removed in a timely manner, thereby preventing disruption of normal start logic of the application and preventing impact on user experience. In addition, the starting window added in the native procedure can be removed normally, thereby preventing disruption of normal execution logic of the native procedure, and improving stability and reliability of the system. In addition, the value of the visual identifier can be used to accurately and quickly determine whether an interface is a visual interface, thereby improving a speed and accuracy of executing the procedure of this solution.

In a possible implementation, the removal delay condition further includes one or more of the following: the starting window held by the first activity has not been removed; a current removal delay count threshold is greater than 0; and a source record exists in the source record set.

In this implementation, the removal delay condition can prevent removal of a starting window of a same activity from being delayed for a plurality of times, that is, prevent the procedure from always lagging at a same activity, which causes a starting lag, thereby improving user experience.

In a possible implementation, after the first starting window is removed, the method further includes: clearing the first identifier, the second identifier, the source record set, and the first value.

In this implementation, after the starting window is removed, various identifiers added in the procedure of this solution are cleared, thereby preventing the procedure from being confused during subsequent running, and improving stability and reliability of the system. In addition, clearing various identifiers added in the procedure of this solution can further prevent an error in quickly starting the first function of the first application next time, and improve reliability of system running.

In a possible implementation, the first transition component has a motion attribute.

The first transition component has the motion attribute, and in this case, the first transition component is displayed with a motion effect, thereby improving vividness of interface display and improving visual experience of the user.

In a possible implementation, a motion corresponding to the first transition component is an icon enlargement motion, and the method further includes: Before the first transition component is submitted to the system interface process, and when it is determined that the first transition component is a transition component corresponding to the first activity, the system service process cancels a transparency attribute of the first transition component.

In this implementation, before the first transition component is submitted to the system interface process, the transparency attribute of the first transition component corresponding to the first activity is cancelled, so that the home screen process can perform the icon enlargement motion, thereby improving a motion effect and improving visual experience of the user.

In a possible implementation, the method further includes: In the process of starting the first activity, the system service process determines, based on an activity record that corresponds to the first activity and that is collected in the first transition component, that the first transition component is the transition component corresponding to the first activity.

In this implementation, the activity record can be used to simply and quickly determine whether the transition component is the transition component corresponding to the first activity. Specifically, if the activity record collected by the transition component records the record of the first activity, it indicates that the transition component is the transition component corresponding to the first activity.

In a possible implementation, the electronic device further includes the process of the first application, and the method further includes: In response to the starting of the first activity by the system service process, the process of the first application executes the lifecycle of the first activity. In the process of executing the lifecycle of the first activity, the process of the first application requests the system service process to start a second activity of the n activities. In response to the request of the process of the first application, the system service process starts the second activity and creates a second transition component. In a process of starting the second activity, the system service process transfers the first starting window to the second activity.

In this implementation, when the second activity is started, the first starting window is transferred from the first activity to the second activity, so that the transition page can be continuously displayed without a screen flickering phenomenon, thereby improving visual experience of the user.

In a possible implementation, a moment at which the second activity is started is later than the moment at which the first transition component is ready.

In this implementation, the moment at which the second activity is started is limited to be later than the readiness of the first transition component, thereby preventing the second activity from affecting loading of the first transition component, preventing impact on the display of the transition page, and further preventing a delay in a starting response.

In a possible implementation, the moment at which the second activity is started is later than a moment at which layer display of the first starting window is completed.

The moment at which the layer display is completed is a moment at which execution of a showSurface() function is completed.

In this implementation, the moment at which the second activity is started is limited to be later than the moment at which the layer display of the first starting window is completed, thereby preventing the second activity from affecting drawing and display of the starting window, preventing impact on the display of the transition page, and further preventing a delay in a starting response.

In a possible implementation, the method further includes: In the process of starting the first activity, the system service process sets a condition variable, where the condition variable includes: the first transition component has been submitted to the system interface process, and the layer display of the first starting window has been completed. The system service process starting the second activity includes: When it is determined that the condition variable is unlocked, the system service process starts the second activity.

In this implementation, the condition variable is set, so that an occasion for starting the second activity can be accurately limited, thereby further preventing impact on the display of the transition page.

In a possible implementation, the method further includes: The system service process sets valid duration in the process of starting the first activity. If the condition variable is met within the valid duration from a moment at which the condition variable is set, the system service process determines that the condition variable is unlocked. If the condition variable is still not met after expiration of the valid duration from a moment at which the condition variable is set, the system service process unlocks the condition variable.

In this implementation, the valid duration is set, so that the condition variable is automatically unlocked when the condition variable is still not met upon expiration of the valid duration. This can avoid a case that the condition variable always cannot be unlocked due to abnormal procedure execution, and consequently a subsequent activity always cannot be started, thereby improving system stability.

In a possible implementation, before the system service process transfers the first starting window to the second activity, the method further includes: In the process of starting the second activity, when it is determined that a source record exists in the source record set, the system service process sets a second source record corresponding to the second activity, and assigns a value to the second source record, where the source record is used to represent starting of a previous activity of a third activity, and the third activity is any one of the n activities. The second source record is added to the source record set.

In this implementation, the second source record is set, so that it is convenient to subsequently quickly and accurately determine whether the activity is the first activity or another activity.

In a possible implementation, the assigning a value to the second source record includes: The system service process transfers the value of the first source record to the second source record, where the first source record is the source record corresponding to the first activity. If the transferred value is empty, the system service process uses an activity record of a fourth activity as the value of the second source record, where the fourth activity is an activity that currently holds the first starting window.

In this implementation, when the transferred value is empty, the source record of the activity that holds the starting window in the source record set is used as a value of a source record of a new activity. Therefore, in any case, an activity corresponding to a value of a source record in the procedure of this solution of this application holds a starting window. Therefore, a source record can be used to accurately obtain an activity that currently holds a starting window, so that the starting window is accurately transferred to a new activity, thereby improving accuracy of transferring the starting window, and improving reliability of an optimization procedure.

In a possible implementation, the system service process transferring the first starting window to the second activity includes: obtaining the second source record from the source record set; and transferring the first starting window from the first activity to the second activity based on the value of the second source record.

In this implementation, the starting window is transferred based on the source record, so that the starting window can be quickly and accurately transferred to the current activity.

In a possible implementation, the method further includes: Before the second transition component is submitted to the system interface process, and when it is determined that the second transition component is another transition component, the system service process cancels a motion attribute of the second transition component, where the another transition component is an activity other than the first activity in the n activities.

In other words, the transition component corresponding to the first activity has a motion attribute, and the transition component corresponding to the activity following the first activity has no motion attribute, thereby preventing screen flickering caused by frequent switching of a motion when an activity is started across task stacks, and improving a display effect. In addition, only the first transition component has a motion attribute, and a motion execution time is relatively short, thereby avoiding a case that due to an excessively long motion execution time, loading of an activity of the application is completed, but execution of a motion has not been completed. Therefore, a failure of an interface of the application to respond to a user operation can be avoided, thereby improving user experience.

In a possible implementation, the method further includes: In the process of starting the second activity, the system service process determines, based on an activity record that corresponds to the second activity and that is collected in the second transition component, that the second transition component is the another transition component.

In this implementation, the activity record can be used to simply and quickly determine whether the transition component is another transition component corresponding to another activity. Specifically, if the activity record collected by the transition component records the record of the another activity, it indicates that the transition component is the transition component corresponding to the another activity.

In a possible implementation, after the system service process transfers the first starting window to the second activity, the method further includes: In the process of starting the second activity, if the first activity and the second activity do not belong to a same task stack, the system service process increases a layer level of the first starting window by one level.

In this implementation, in a scenario of starting an activity across task stacks, the layer level of the first starting window is increased by one level. In this way, when the starting window is successfully added in the native procedure, the starting window added in the native procedure can be prevented from covering the first starting window added in the procedure of this solution, that is, the first starting window is prevented from being blocked, an effect of the transition page is prevented from being affected, and user experience is improved.

In a possible implementation, the method further includes: In a process of executing a lifecycle of the second activity, the process of the first application determines whether an interface corresponding to the second activity is a visual interface. If the interface corresponding to the second activity is a visual interface, the system service process sets a value of a visual identifier of the second activity to a first value.

In a possible implementation, the method further includes: After a second completion indication is received, the system service process determines whether a removal delay condition is met, where the second completion indication is used to indicate that drawing for the second activity is completed. If the removal delay condition is met, the system service process delays removing the first starting window. If the removal delay condition is not met, the system service process removes the first starting window.

Optionally, the second completion indication may be indicated to the system service process by the process of the first application by using a finishDrawing() function.

A specific process of identifying whether the interface corresponding to the second activity is a visual interface and triggering determining of a removal delay when drawing of the second activity is completed is similar to that of the first activity, and beneficial effects are also similar. Details are not described again.

Processes of executing a subsequent third activity, a subsequent fourth activity, ... are similar to the process of executing the second activity. A main difference lies in that for the third activity and subsequent activities, whether the condition variable is unlocked does not need to be determined.

According to a second aspect, this application provides an apparatus. The apparatus is included in an electronic device, and the apparatus has a function of implementing behaviors of the electronic device in the first aspect and the possible implementations of the first aspect. The function may be implemented by hardware, or may be implemented by hardware by executing corresponding software. The hardware or the software includes one or more modules or units corresponding to the foregoing function, for example, a receiving module or unit or a processing module or unit.

According to a third aspect, this application provides an electronic device. The electronic device includes a processor, a memory, and an interface. The processor, the memory, and the interface cooperate with each other, so that the electronic device performs any one of the methods in the technical solutions in the first aspect.

According to a fourth aspect, this application provides a chip that includes a processor. The processor is configured to read and execute a computer program stored in a memory, to perform the method in any one of the first aspect and the possible implementations of the first aspect.

Optionally, the chip further includes the memory, and the memory is connected to the processor by using a circuit or a wire.

Further, optionally, the chip further includes a communication interface.

According to a fifth aspect, this application provides a computer-readable storage medium. The computer-readable storage medium stores a computer program, and when the computer program is executed by a processor, the processor is enabled to perform any one of the methods in the technical solutions in the first aspect.

According to a sixth aspect, this application provides a computer program product. The computer program product includes computer program code, and when the computer program code is run on an electronic device, the electronic device is enabled to perform any one of the methods in the technical solutions in the first aspect.

### BRIEF DESCRIPTION OF DRAWINGS

FIG. 1A to FIG. 1C are examples of a schematic diagram of an application scenario of an application starting method according to an embodiment of this application;
FIG. 2A to FIG. 2D are other examples of a schematic diagram of an application scenario of an application starting method according to an embodiment of this application;
FIG. 3 is an example of a schematic diagram of a structure of an electronic device 100 according to an embodiment of this application;
FIG. 4 is an example of a block diagram of a software structure of an electronic device 100 according to an embodiment of this application;
FIG. 5A and FIG. 5B are examples of a schematic diagram of a time sequence of an application starting method according to an embodiment of this application;
FIG. 6 is another example of a schematic diagram of a software architecture of an electronic device according to an embodiment of this application;
FIG. 7A and FIG. 7B are examples of a schematic diagram of a time sequence of an application starting method according to an embodiment of this application;
FIG. 8 is an example of a schematic diagram of response time comparison according to an embodiment of this application;
FIG. 9 is another example of a schematic diagram of a time sequence of an application starting method according to an embodiment of this application;
FIG. 10A to FIG. 10D are examples of a schematic flowchart of an application starting method according to an embodiment of this application;
FIG. 11 is another example of a schematic flowchart of an application starting method according to an embodiment of this application;
FIG. 12A and FIG. 12B are still other examples of a schematic diagram of a time sequence of an application starting method according to an embodiment of this application;
FIG. 13A to FIG. 13D are still other examples of a schematic flowchart of an application starting method according to an embodiment of this application;
FIG. 14(1) and FIG. 14(2)are examples of a schematic diagram of an interface change according to an embodiment of this application;
FIG. 15 is an example of a schematic diagram of comparison between interfaces for quickly starting an application based on an optimization procedure and a native procedure according to an embodiment of this application;
FIG. 16 is an example of a schematic diagram of comparison between interfaces for quickly starting an application based on an optimization procedure and a native procedure according to an embodiment of this application; and
FIG. 17A and FIG. 17B are still other examples of a schematic diagram of a time sequence of an application starting method according to an embodiment of this application.

### DESCRIPTION OF EMBODIMENTS

Technical solutions in the embodiments of this application are described below with reference to the accompanying drawings in the embodiments of this application. In the descriptions of the embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, in the descriptions of the embodiments of this application, "a plurality of" means two or more.

The following terms "first", "second", and "third" are merely used for description purposes, and should not be understood as an indication or implication of relative importance or an implicit indication of a quantity of indicated technical features. Therefore, a feature defined with "first", "second", or "third" may explicitly or implicitly include one or more such features.

Referring to "one embodiment", "some embodiments", or the like that is described in this specification of this application means that specific features, structures, or characteristics described with reference to one or more embodiments are included in the one or more embodiments of this application. Therefore, statements such as "in one embodiment", "in some embodiments", and "in some other embodiments" that appear in different parts of this specification of this application do not necessarily refer to same embodiments, but mean "one or more but not all embodiments" unless otherwise specially emphasized in another manner. The terms "include", "comprise", and "have", and variants thereof all mean "include but are not limited to", unless otherwise specially emphasized in another manner.

To better understand the embodiments of this application, terms or concepts that may be used in the embodiments are explained and described below.

### 1. Interface, activity (activity), and window (window)

The electronic device may install and run an application. When the electronic device runs any application such as an application A in the foreground, a display screen of the electronic device displays an interface (also referred to as a page) of the application A, and a user of the electronic device may perform an interactive operation on the interface of the application A. When the electronic device runs the application A in the background, the electronic device no longer displays the interface of the application A, and the user of the electronic device cannot perform an interactive operation on the interface of the application A.

After receiving an instruction for starting an application, the electronic device creates a process corresponding to the application. Then, an activity is loaded based on the process of the application. The activity is used to display an interface of the application, interact with the user, and process service logic. It may be understood that when the application runs, there is only one process corresponding to the application in the system. However, during running of the process, a plurality of processes may be successively loaded based on different user operations or different preset display logic of the application. Different activities may correspond to different interfaces.

The interface includes a view (view). During interface display and interaction with the user, the activity may internally hold a window object to help the activity manage the view. When the application is started, the system creates a window for the activity to display the view in the interface. Therefore, from another perspective, the window is a carrier of the view and a container of the view.

### 2. Task stack (task stack)

The task stack, also briefly referred to as a task (task), is a container for placing an activity instance. When an application is started, the system creates a corresponding task stack for the application. In other words, one application corresponds to one task stack.

In actual application, the process of starting or running an application may involve jumps of some interfaces. These interfaces may be implemented by using an activity of another application. In other words, display of the interfaces requires loading of an activity across task stacks. For example, during starting, the application A needs to jump from an interface a1 to an interface b1, and then jump to an interface c1. Activities corresponding to the interface a1 and the interface b1 are located in a task stack of the application A, and an activity corresponding to the interface c1 is located in a task stack of the application B. Therefore, in a process in which the interface b1 jumps to the interface c1, the activity needs to be loaded across task stacks.

### 3. Transition (transition) page

It may be understood that, in the process of starting the application, that is, from the user performing an operation of starting the application to the screen displaying a specific to-be-displayed interface (hereinafter referred to as a target interface) of the application, the terminal device needs to undergo a series of processing operations, and the user needs to wait for a specific time. To shorten a waiting time of the user, and further to improve visual experience of the user, the electronic device may display some transition interfaces in this period of time. These interfaces are referred to as transition pages (or referred to as scene change pages, starting pages, motion pages, or starting motions). Optionally, the transition page may be an icon page, an advertisement page, a blank page, a Logo page, a snapshot page, or the like. Optionally, a motion attribute of the transition page may be set as required. If the motion attribute is set to "yes" (for example, true), the transition page presents an animation effect (briefly referred to as a motion). If the motion attribute is set to "no" (for example, false), the transition page presents a static effect. In other words, the transition page may be a statically displayed interface, or may be a motion interface. A motion displayed in the motion interface may be, for example, gradual enlargement of an icon, or successive appearing of a text.

The system may add a starting window and trigger execution of a transition (transition) component to implement display of the transition page. Transition, hereinafter referred to as transition for short, is used to implement display of a transition effect in the window, for example, implement display of an animation effect.

### 4. Cold start, warm start, and hot start

It may be understood that, after the application is started, a process of the application continuously runs in the background, and an activity of the application is also placed in a task stack. However, after the application changes from running in the foreground to running in the background, the process of the application may be destroyed and the activity may be reclaimed, that is, the process of the application does not exist in the background of the system.

The starting of the application may be divided into cold start, warm start, and hot start based on whether the process of the application exists in the background of the system and whether the activity of the application exists during starting of the application.

When the user taps an icon of the application to start the application, the process of the application does not exist in the background of the system. In this case, the system needs to create and start a process for the application. Then, after starting of the process is completed, the system loads an activity of the application by using the process, until an interface of the application is displayed after the activity is successfully loaded. This starting process may be referred to as cold start.

After the application is started, the application may change from running in the foreground to running in the background. After the application is running in the background, the process of the application may still exist in the system. If the user taps an icon of the application to enable the application to run again in the foreground, because the process of the application exists in the background of the system, the system no longer needs to create and start the process for the application. If the activity of the application still exists in a memory of the system, the application does not need to repeatedly load the activity, but displays, in the foreground, the interface corresponding to the activity in the task stack of the application. This starting process may be referred to as hot start.

After the application changes from running in the foreground to running in the background, the process of the application may be killed in the background (for example, the process of the application is destroyed) and the activity is reclaimed, that is, the process of the application does not exist in the background of the system. However, after the process is killed, the application may still have a self-start behavior. To be specific, the application may independently request, in the background, the system to create and start a process for the application. If the process of the application is successfully created and started in the background of the system, and when the user taps the icon of the application to enable the application to run again in the foreground, because the process of the application exists in the background of the system, the system no longer needs to create and start the process for the application. However, because the activity of the application has been reclaimed, the system needs to load the activity of the application by using the process of the application until an interface of the application is displayed after the activity is successfully loaded. This starting process may be referred to as warm start.

### 5. Starting an activity, executing a lifecycle of the activity, and loading the activity

In the embodiments of this application, starting the activity means that a system service (systemserver) process processes a starting request of the activity or a starting transaction of the activity, that is, controls a process of starting the activity. Starting the activity may be implemented by using a startActivity() function.

Executing the lifecycle of the activity means that the process of the application performs processes such as activity starting (activityStart), activity layout (activityResume) loading, frame drawing, and drawing completion (finishDrawing). To be specific, the starting of the activity is controlled by the systemserver, but the actual starting action is performed by the process of the application.

In the embodiments of this application, loading the activity refers to a process from starting the activity to completing the execution of the lifecycle of the activity.

The following describes an application scenario and a technical problem of this application.

To help a user start an application, a system of an electronic device provides a mechanism for the application to start (namely, quickly start) in a shortcut manner. Quick starting of different functions may be designed for the application based on a requirement of the application, so that the user can display an interface of a required function in one step.

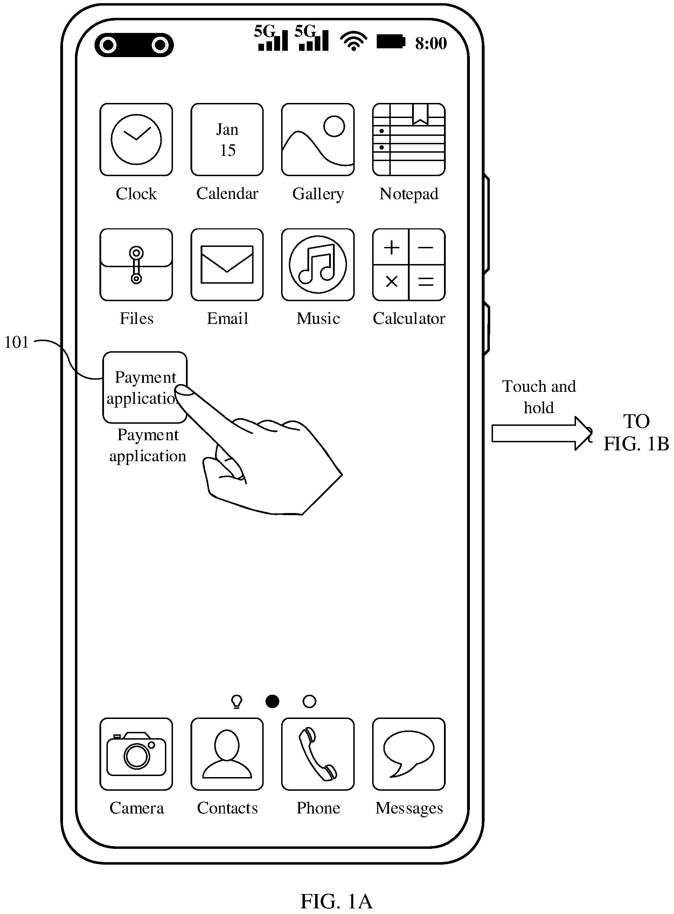

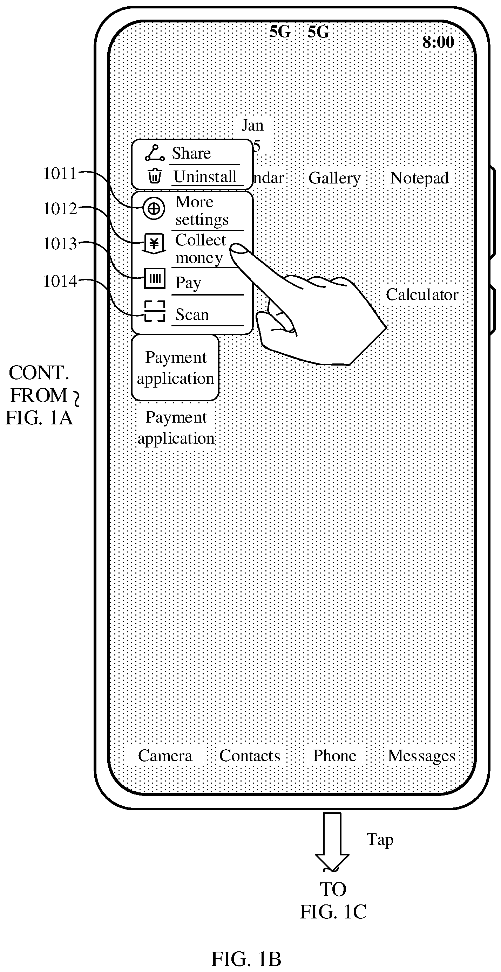

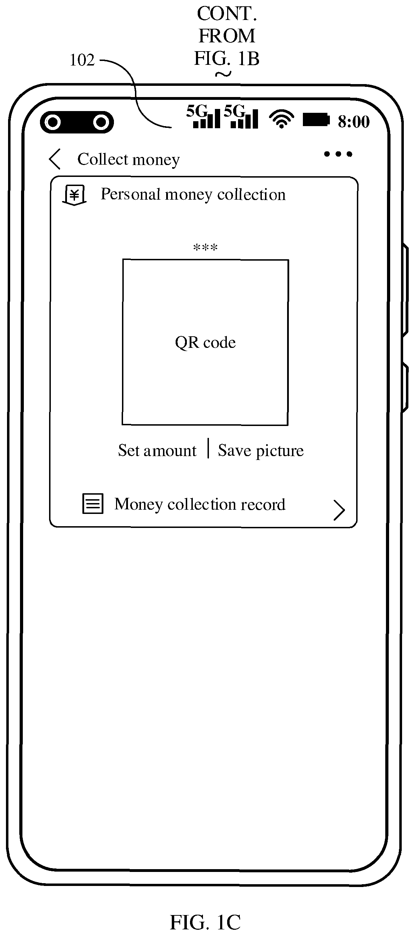

For example, FIG. 1A to FIG. 1C are examples of a schematic diagram of an application scenario of an application starting method according to an embodiment of this application. In this embodiment, the user may quickly start a specific function of the application by touching and holding an application icon on the home screen, and directly display an interface of the function. Specifically, in an example in which the electronic device is a mobile phone, as shown in FIG. 1A, a home screen of the mobile phone displays icons of a plurality of applications. A payment application is used as an example. The user may touch and hold an icon 101 of the payment application. In response to the operation of the user, the home screen displays function options of the payment application, for example, including: a more settings function option 1011, a money collection function option 1012, a payment function option 1013, and a scanning function option 1014, as shown in FIG. 1B. If the user taps a specific function option, the function is started and an interface corresponding to the function is displayed. For example, the user taps the money collection function option 1012. In response to the operation of the user, the money collection function of the payment application is started, and a collection code interface 102 is displayed, as shown in FIG. 1C.

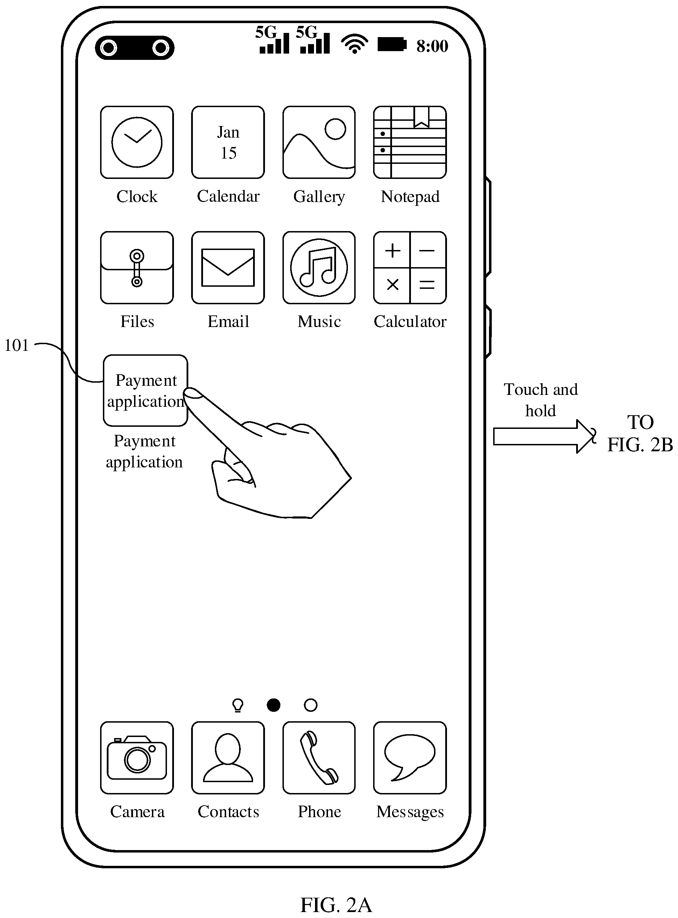

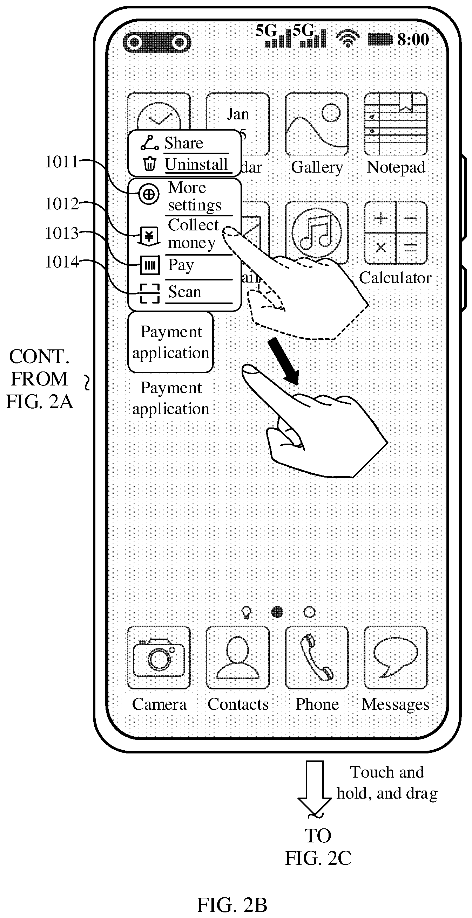

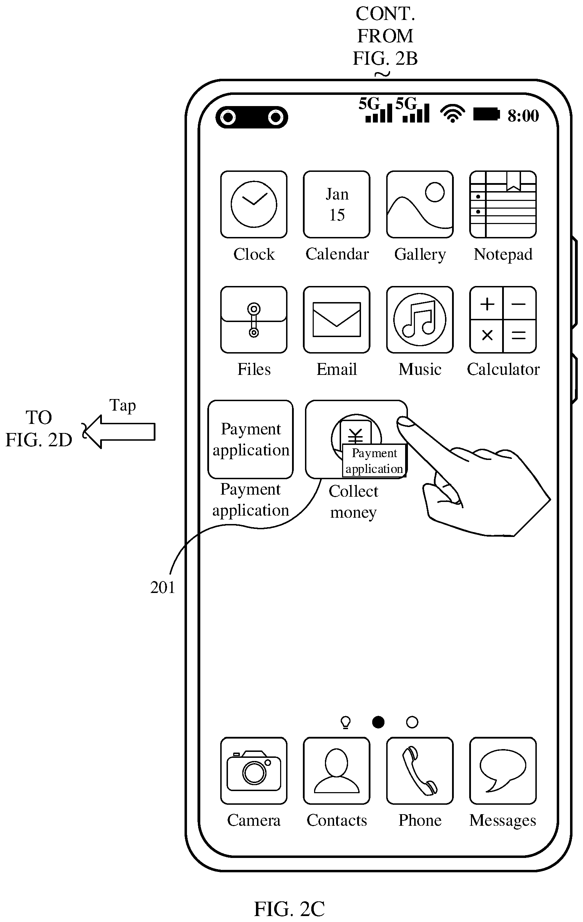

For example, FIG. 2A to FIG. 2D are other examples of a schematic diagram of an application scenario of an application starting method according to an embodiment of this application. In this embodiment, the user may start a specific function of the application by using a shortcut icon of the application on the home screen, and display an interface of the function. As shown in FIG. 2A, the payment application is still used as an example, and the home screen includes an icon of the payment application. The user may touch and hold the icon of the payment application. In response to the operation of the user, the home screen displays function options of the payment application, for example, including a more settings function option 1011, a money collection function option 1012, a payment function option 1013, and a scanning function option 1014, as shown in FIG. 2B. The user may touch and hold a specific function option and drag the function option to the home screen to form a shortcut icon on the home screen. The money collection 1012 function option is still used as an example. The user touches and holds and drags the money collection function option 1012 to a specific location on the home screen, and then lifts the finger. After the user lifts the finger, the interface displays a shortcut icon 201 corresponding to the money collection function option 1012, as shown in FIG. 2C.

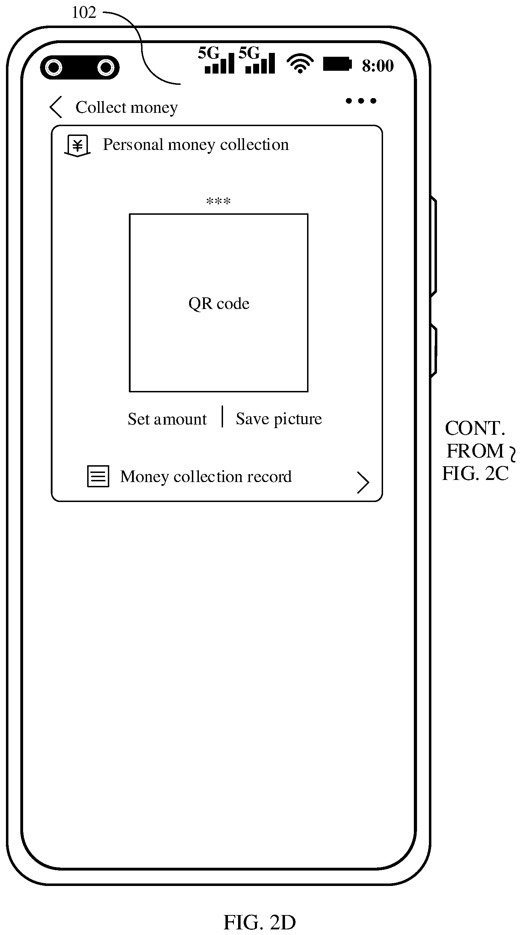

The user taps the shortcut icon 201. In response to the operation of the user, the mobile phone starts a money collection function of the payment application, and displays a collection code interface 102, as shown in FIG. 2D.

It should be noted that the foregoing two application scenarios are both described by using an example in which an application is quickly started from a home screen. In actual use, the application may alternatively be started from another entry in a shortcut manner. For example, the application may alternatively be started on a leftmost home screen in a shortcut manner. This embodiment of this application sets no limitation on a specific entry for quick starting, a specific trigger manner for quick starting, and the like. It may be understood that, regardless of a quick starting manner, a process in which the electronic device starts the application is the same or similar.

The inventor finds that in a related technology, some functions of some applications have a problem of a relatively long response time of the application, that is, a problem of slow response, during quick starting. The response time of the application is also referred to as a response delay or a starting time, and is a time from when the user performs an operation of starting the application (for example, tapping a function option or tapping a shortcut icon in the foregoing embodiments) to when the screen displays the first frame of picture related to the application. The first frame of picture related to the application may be an interface of the application itself, or may be a transition page of the application.

Specifically, in the related technology, some functions of some applications have no transition page during quick starting. This causes not only a relatively long response time for application starting, but also a relatively poor visual effect of the user. Although some functions of some other applications have transition pages during quick starting, a response time is also relatively long, and user experience is also relatively poor. For example, when a payment function of Alipay^{®} is started in a shortcut manner, a response time is approximately 621 milliseconds (ms). When a scanning function of Alipay^{®} is started in a shortcut manner, a response time is approximately 447 ms. When a collection/payment function of WeChat^{®} is started in a shortcut manner, a response time is approximately 600 ms. When a scanning function of WeChat^{®} is started in a shortcut manner, a response time is approximately 155 ms.

In view of this, an embodiment of this application provides an application starting method, so that a quick starting scenario can be identified, and in the quick starting scenario, a starting window is added and a transition page is displayed during loading of a first activity of an application, and the starting window is transferred to a subsequent activity. In this way, not only a response time can be greatly shortened, but also a transition page can provide better visual experience for a user. In summary, according to the method, user experience can be improved.

The following describes a hardware structure and a software architecture of an electronic device to which the method is applicable with reference to the accompanying drawings.

The application starting method provided in embodiments of this application may be applied to an electronic device on which an application program (application, APP) may be installed, such as a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, and a personal digital assistant (personal digital assistant, PDA). A specific type of the electronic device is not limited in the embodiments of this application.

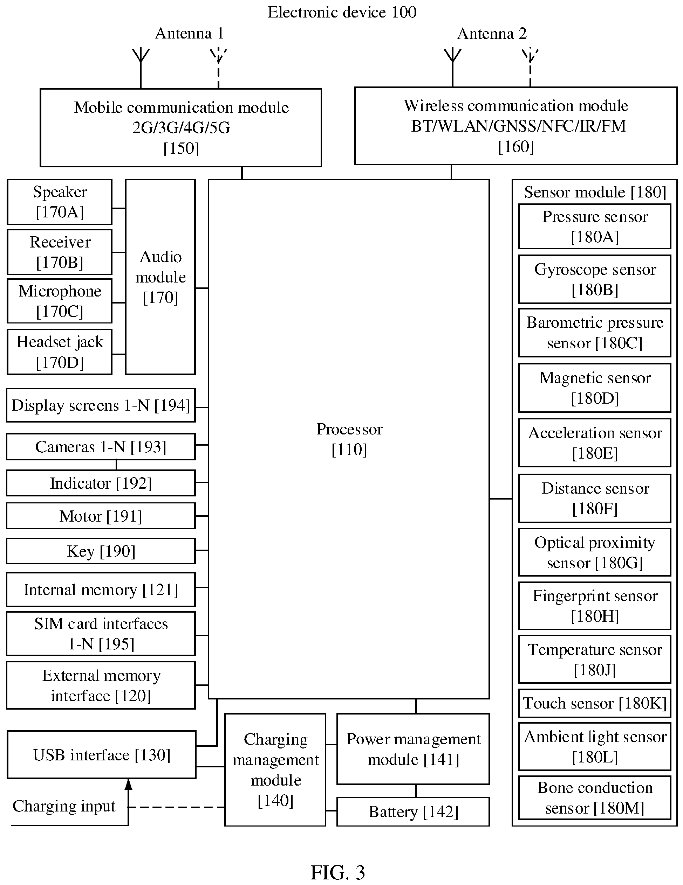

For example, FIG. 3 is an example of a schematic diagram of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in the embodiments of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N display screens 194, where N is a positive integer greater than 1.

The touch sensor 180K is also referred to as a "touch panel". The touch sensor 180K may be disposed on the display screen 194. The touch sensor 180K and the display screen 194 form a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180K may alternatively be disposed on a surface of the electronic device 100, at a location different from that of the display screen 194.

A software system of the electronic device 100 may use a layered architecture, an event-driven architecture, a microkernel architecture, a microservice architecture, or a cloud architecture. In the embodiments of this application, an Android system with a layered architecture is used as an example to describe a software structure of the electronic device 100.

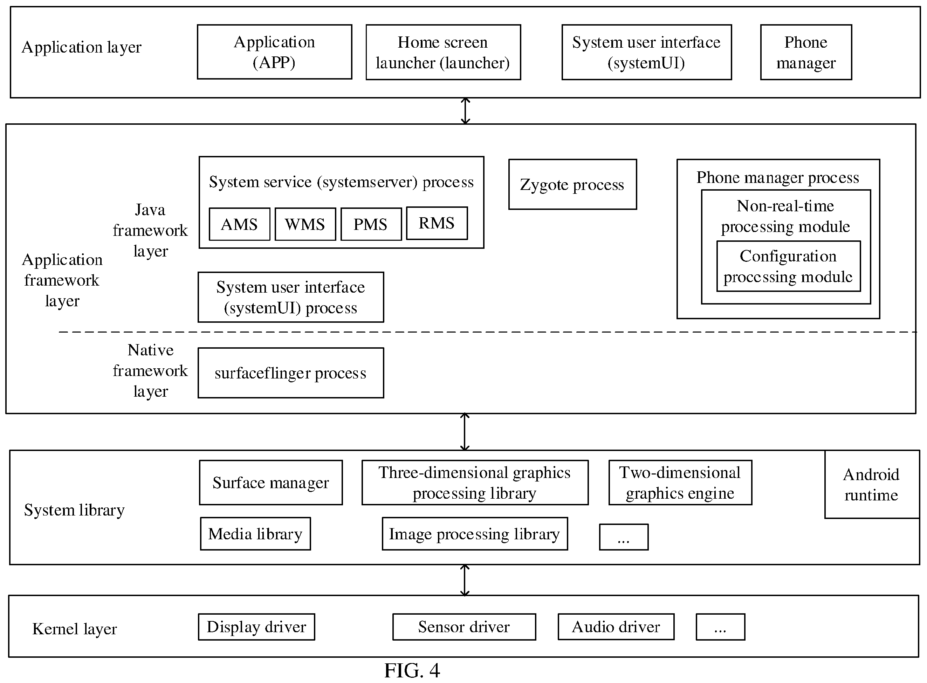

FIG. 4 is a block diagram of a software structure of an electronic device 100 according to an embodiment of this application. In a layered architecture, software is divided into several layers, and each layer has a clear role and task. Layers communicate with each other through a software interface. In some embodiments, the Android system is divided into four layers, which are respectively an application layer, an application framework (framework, FWK) layer, an Android runtime (Android runtime) and system library, and a kernel layer from top to bottom.

As shown in FIG. 4, the application layer may include a series of application packages. These application packages are applications that can start one or more functions in a shortcut manner, which are collectively shown as an application (APP) in the figure. It may be understood that these applications may be system applications, or may be third-party applications such as a video, a camera, a gallery, and a payment application. In this embodiment of this application, the application layer may further include Android system applications such as a home screen launcher (launcher), a system user interface (systemUI), and a phone manager.

Usually, after an Android system is started, the launcher, as a core application, may reside in and run in the Android system. A starting icon of an application is usually set in the launcher. Specifically, the launcher may detect, by using an application monitoring process (apTouchDaemon) (not shown in FIG. 4), an operation performed by a user on an application icon. After the apTouchDaemon detects a user operation of tapping a starting icon of a specific application, the apTouchDaemon generates an input event, and reports the input event to the launcher. The launcher performs distribution processing on the input event, generates a starting message of the application, and sends the starting message to related services at the application framework layer. These services start an application process of the application, and load an activity. The systemUI is responsible for drawing a starting window, a window of the application, or the like. It should be understood that when the user taps icons of different applications, the launcher generates starting messages for different applications, thereby starting application processes corresponding to the different applications.

The phone manager is configured to manage a system of the electronic device.

The application framework layer provides an application programming interface (application programming interface, API) and a programming framework for the applications at the application layer. The application framework layer includes some predefined functions.

As shown in FIG. 4, in this embodiment of this application, the application framework layer may include a system service (systemserver) process, a systemUI process, a Zygote process, a surfaceflinger process, and the like. Specifically, the application framework layer may include a Java framework layer and a native (native) framework layer (also referred to as a C++ framework layer). The systemserver process, the systemUI process, and the Zygote process may run at the Java framework layer. The surfaceflinger process runs at the native framework layer. In addition, after the phone manager application is started, the Java framework layer may further include a phone manager process.

The systemserver process may provide almost all system services for the applications at the application layer, such as an activity manager service (activity manager service, AMS), a window manager service (window manager service, WMS), a package manager service (package manager service, PMS), and a resource manager service (resource manager service, RMS). These system services may reside in the systemserver process in a thread form. The AMS is responsible for uniformly scheduling and managing activities of all processes in the system. The WMS is responsible for managing a window view, for example, responsible for a location, a size, a layout, and the like of an application window. The PMS is responsible for installation, management, uninstallation, and the like of application packages in the system. Specifically, the PMS may identify all components such as an activity of the application, and allocate corresponding permissions to these components. The RMS is responsible for unified management, scheduling, and optimization of resources in the system.

The Zygote process is a daemon service (daemonService) in the Android system. Almost all application processes are forked (fork) by using the Zygote process. Because each application is written in a Java language, each application needs to run in a process form in a separate virtual machine. When being started, the application can fork the virtual machine of the application by using the Zygote process, and share a virtual machine memory and various services provided in the systemserver process.

The surfaceflinger process is responsible for rendering an interface and an application graphic. For example, a window drawn by the systemUI process may be rendered and displayed by the surfaceflinger process.

Usually, in response to the user tapping an icon of a specific application, the launcher may send a starting message of the application to the systemserver process. If the application process of the application does not exist in the current application process, an application process needs to be created for the application, and the systemserver process may invoke the AMS to communicate with the Zygote process, to request the Zygote process to create the corresponding application process for the application. After receiving the request, the Zygote process responds to the request and creates an application process 1. The application process 1 includes a main thread (activityThread) of the application. To start normal running of code of the application, the application process 1 needs to first initialize the main thread of the application, and load a class file of the application into a memory. The main thread may complete initialization of the main thread by executing a main function of the activityThread.

The phone manager process is a process that corresponds to the phone manager application and that is forked by the Zygote process when the application is started, and is used to manage applications, functions, data, or the like running in the system. A non-real-time processing subsystem may run in the phone manager process. The system includes a configuration processing module. The configuration processing module is configured to process configuration information of the application or the activity.

The application starting method provided in this embodiment of this application may be implemented through cooperation between the apTouchDaemon process, the launcher process, the Zygote process, the phone manager process, the systemserver process, the systemUI process, the surfaceflinger process, and the like. The apTouchDaemon process, the launcher process, the systemserver process, the systemUI process, the surfaceflinger process, the phone manager process, and the like may perform cross-process communication based on a binder mechanism. The systemserver process may communicate with the Zygote process based on a socket (socket) mechanism.

The Android runtime includes a kernel library and a virtual machine. The Android runtime is responsible for scheduling and management of an Android system.

The kernel library includes two parts: functional functions that need to be invoked by a java language, and a kernel library of Android.

The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of common audio and video formats, a still image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D graphics drawing.

The kernel layer is a layer between hardware and software. The kernel layer includes at least a display driver, a camera driver, an audio driver, and a sensor driver.

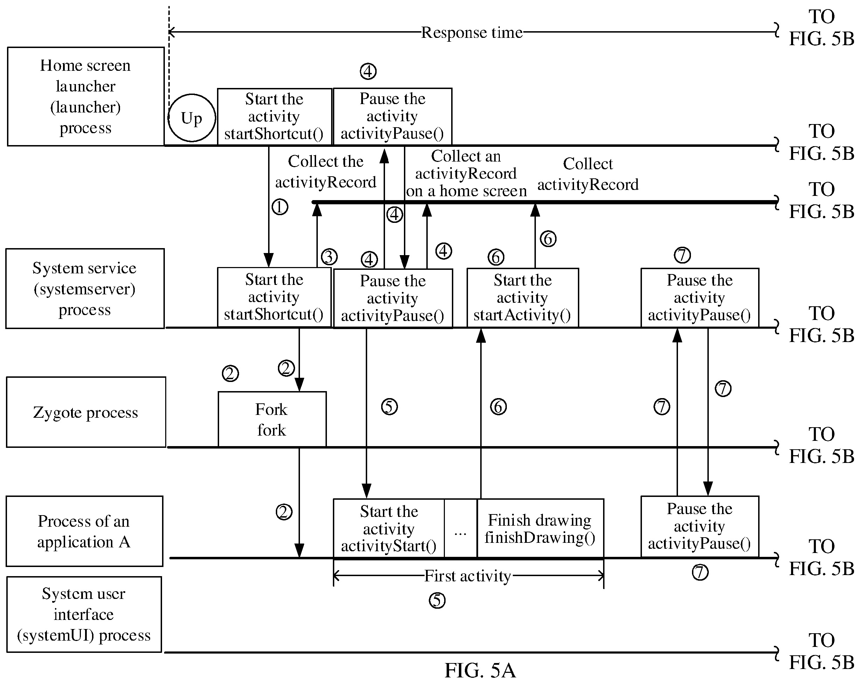

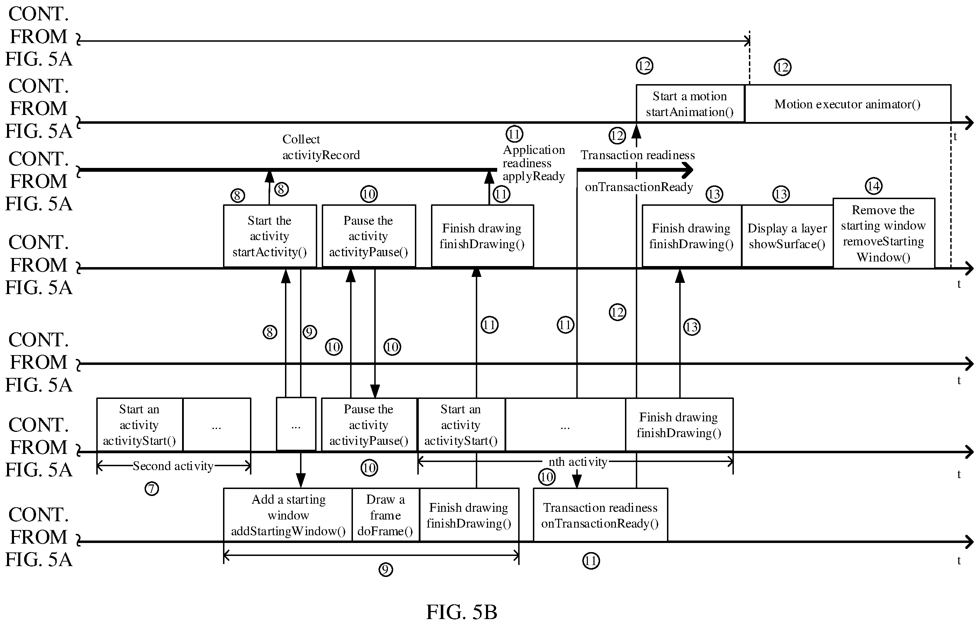

The following describes a native procedure for starting an application on the basis of the software architecture provided in FIG. 4 and with reference to FIG. 5A and FIG. 5B. The native procedure may be applied to the examples of the scenarios shown in FIG. 1A to FIG. 2D. For example, a function a of an application A is started in a shortcut manner. It is assumed that an interface of the function a is an interface (namely, a target interface) corresponding to an nth activity, that is, an interface a, and the system needs to successively load the first to the nth activities before displaying the target interface a. For example, the function a may be a money collection function of the payment application. In this case, the target interface a may be a collection code interface 102 shown in FIG. 1C and FIG. 2D.

FIG. 5A and FIG. 5B are examples of a schematic diagram of a time sequence of an application starting method according to an embodiment of this application. As shown in FIG. 5A and FIG. 5B, in an example in which a function a of an application A is cold started in a shortcut manner, a starting process includes:
① In response to occurrence of a lifting (up) event in a quick starting operation, a launcher process invokes a startShortcut() function to send a starting message to a systemserver process.
   Optionally, the quick starting operation may be, for example, an operation of tapping a shortcut icon on a home screen, or an operation of touching and holding an application icon and then tapping a function option. Specifically, an apTouchDaemon detects a quick starting operation of a user, and detects that the quick starting operation has been lifted (namely, a lifting event occurs), and generates an input event. The apTouchDaemon invokes an InputEvent() function to report the input event to the launcher process. After receiving the input event, the launcher process determines an application (the application A) corresponding to the input location and an interface (an interface a) corresponding to the to-be-started function. Then, the launcher process sends a starting message to an AMS in the systemserver process based on a binder mechanism and by using the startShortcut() function. The starting message is used to request to start the function a of the application A in a shortcut manner. Optionally, the starting message may carry information about the to-be-started application (namely, the application A) and information about the to-be-started function (namely, the function a). The information about the application may include, for example, one or more of a package name of the application, an identity document (identity document, ID) of a package, and the like. For example, the information about the to-be-started function may include one or more of a name of the to-be-started function, an ID of the to-be-started function (also referred to as an ID of a quick starting function or first information, hereinafter referred to as a shortcut function ID for short), and the like. The shortcut function ID is used to mark a unique identity of the to-be-started function.
② In response to the starting message, the systemserver process requests a Zygote process to fork a process of the application A, and in response to the request, the Zygote process forks the process of the application A.
   Specifically, the AMS in the systemserver process responds to the starting message, and requests, by using the socket communication mechanism, the Zygote process to fork the process of the application A. In response to the request of the AMS, the Zygote process forks the process of the application A.
③ The systemserver process processes a starting transaction of a first activity, and at the same time, the systemserver process collects (collect) an activity record (activityRecord) corresponding to the first activity of the application A.

It may be understood that the AMS in the systemserver process is responsible for uniformly managing and scheduling an activity, and processing a transaction related to the activity, such as a starting request. At the same time when the AMS processes the transaction of the activity, the WMS may collect state information of the activity, so as to help subsequently manage running of the activity, determine a participant of a motion in a subsequent transition page, allocate a layer to the participant for drawing a motion, and so on. The state information of the activity may be maintained by using the activityRecord. The activityRecord is a minimum unit of activity management. Each activityRecord corresponds to one activity in the process of the application.

In this step, in response to the starting message, the systemserver process first starts the first activity of the application A by default. Therefore, after the process of the application A is forked, the AMS processes the starting transaction of the first activity. Meanwhile, the WMS collects the activityRecord corresponding to the first activity to record a state of the activity.

④ The systemserver process invokes an activityPaused() function to notify an activity in the launcher process to enter a paused (pause) state. In addition, the systemserver process collects the activityRecord of the launcher.

In this step, the activity in the launcher process enters the paused state. Therefore, the AMS records the state of the activity in the launcher process by collecting the activityRecord.

Optionally, when the activity in the launcher process is paused, the participant of the motion may further involve a wallpaper (wallpaper) or a leftmost home screen (leftmost home screen). Therefore, an activityRecord of the wallpaper or the leftmost home screen may be further collected. This is not specifically limited in this application.

It may be understood that when another activity is started or paused (pause), the WMS also collects the activityRecord until the transaction is ready. This is also applicable to subsequent embodiments. Details are not described again.

⑤ The systemserver process indicates the process of the application A to execute a lifecycle of the first activity. The process of the application A executes the lifecycle of the first activity in response to the indication of the systemserver process.

Specifically, executing the lifecycle of the activity includes executing starting of the activity by using the activityStart() function, loading an activity layout by using the activityResume() function, drawing a frame by using the doFrame() function, indicating to complete drawing by using the finishDrawing() function, and so on, which are not all shown in FIG. 5A and FIG. 5B. After drawing the frame by using the doFrame() function is completed, the process of the application A may request the systemserver process to add display. The systemserver process adds display for the activity by using an addToDisplay().

⑥ In the process of executing the lifecycle of the first activity, the process of the application A invokes the startActivity() function to request the systemserver process to start a second activity. The systemserver process processes the starting request of the second activity and collects an activityRecord corresponding to the second activity.

Optionally, the process of the application A may request to start the second activity in an activityStart phase or an activityResume phase of the lifecycle of the first activity.

⑦ After determining that the process of the application A finishes executing the lifecycle of the first activity, the systemserver process invokes the activityPaused() function to notify the process of the application A to pause the first activity, and indicate the process of the application A to execute a lifecycle of the second activity. The process of the application A executes the lifecycle of the second activity in response to the indication of the systemserver process.

This process is repeated until the process of the application A executes a lifecycle of an (n-1)th activity.

⑧ In the process of executing the lifecycle of the (n-1)th activity, the process of the application A invokes the startActivity() function to request the systemserver process to start an nth activity. The systemserver process processes the starting request of the nth activity and collects an activityRecord corresponding to the nth activity.

⑨ When processing the starting request of the nth activity, the systemserver process notifies a systemUI to add a starting window. The systemUI process invokes an addStartingWindow() function to create a starting window, uses a doFrame() function to draw a view of the starting window, and then uses a finishDrawing() function to indicate to complete drawing of the starting window. After the systemserver process determines that the drawing of the starting window is completed, the application is ready (applyReady).

⑩ After determining that the process of the application A finishes executing the lifecycle of the (n-1)th activity, the systemserver process invokes the activityPaused() function to notify the process of the application A to pause the (n-1)th activity, and indicate the process of the application A to execute the lifecycle of the nth activity. The process of the application A executes the lifecycle of the nth activity in response to the indication of the systemserver process.

⑪ After determining that the drawing of the starting window is completed, the systemserver process notifies the systemUI process to execute transaction readiness. The systemUI process executes the transaction readiness by using an onTransactionReady() function.

The transaction readiness represents that a transition is ready and the transition can start to be executed.

In some other embodiments, the transaction readiness (onTransactionReady) may also be referred to as transition readiness (transitionReady).

It may be understood that when the systemserver process notifies the systemUI process to execute the transaction readiness, the ready transition may be submitted to the systemUI process. After the transition is processed by the systemUI process, the launcher process is further notified to execute a motion.

⑫ After the execution of the transaction readiness is completed, the systemUI process notifies the launcher process to execute a motion. The launcher process starts the motion by using the startAnimation() function and executes the motion by using an animator() function, that is, executes the transition to display a transition page. The transition is generated based on the collected activityRecord of each activity.

⑬ After determining that the process of the application A finishes executing the lifecycle of the nth activity, the systemserver process invokes a showSurface() to display a layer corresponding to the nth activity, that is, display a target interface a.

⑭ The systemserver process invokes a removeStartingWindow() function to remove the starting window, and displays an interface of the application A in a window of the application A.

It should be noted that if drawing of the target interface a of the application A is completed during motion execution, the interface may be displayed. However, at this time, a layer of the motion is an upper layer, and the interface cannot respond to an operation of the user. After the motion execution is completed, the interface displayed in the window can respond to the operation of the user at this time.

It can be learned from the foregoing description that in a native procedure, during quick starting of the application A, jumps of n activities are required. Consequently, a time length (namely, a response time) between a moment at which the user performs the quick starting operation and a moment at which the interface displays the transition page is relatively long. The response time is approximately equal to a sum of duration of lifecycles of all activities in the application A. In other words, in the native procedure, a response is made only after all interfaces (which are referred to as intermediate interfaces) preceding the target interface are all ready. The response time depends on a lifecycle of an intermediate interface of the application A, and the response is relatively slow.

Reasons for slow response in the native procedure are analyzed below.

The display of the transition page depends on the starting window. The transition page can be normally displayed only when the starting window is successfully added.

In some embodiments, when an application is cold started from a home screen in a non-shortcut manner (that is, an application icon on the home screen is tapped), a partial procedure of adding a starting window is as follows:

```
Task#startActivityLocked
           StartingSurfaceController#showStartingWindow
             ActivityRecord#showStartingWindow
                ...
                  addStartingWindow
                   scheduleAddStartingWindow
                      AddStartingWindow#run
                       SplashScreenStartingData#createStartingSurface
                          StartingSurfaceController#createSplashScreenStartingSurface
                             TaskOrganizerController#addStartingWindow
                                 ITaskOrganizer#addStartingWindow
```

It can be learned that when an application is started in a non-shortcut manner, a starting window may be added by using a related procedure of the addStartingWindow, so as to implement display of a transition page.

In some other embodiments, when an application is cold started from the home screen in a shortcut manner, a partial procedure of adding a starting window is as follows:

```
         Task#startActivityLocked
           StartingSurfaceController#showStartingWindow
               ActivityRecord#showStartingWindow
                  ...
                  addStartingWindow
                      return false
```

It can be learned that when the application is quickly started, false is returned for adding the starting window by using the addStartingWindow() function, that is, adding the starting window is intercepted.

It is found through parsing that themes corresponding to activities for which adding the starting window is intercepted are empty, and a reason for the empty theme is that the activities have a transparency attribute, that is, a value of the windowIsTranslucent attribute is true. However, a native system does not add a starting window for an activity having a transparency attribute.

It is found through further analysis that a plurality of activities loaded in the process of starting the application are activities in different task stacks. In other words, the quick starting process includes loading an activity across task stacks. For example, in the foregoing embodiment, in the process of quickly starting the money collection function of the payment application, n activities may be located in different task stacks. However, the native system has no maintenance mechanism for a starting window across task stacks. When an activity is loaded across task stacks, the system attempts to add one starting window for the activity of each task stack. This causes frequent switching of the starting window when the task stack is switched, thereby causing screen flickering. To resolve this problem, the application sets a value of a windowIsTranslucent attribute of an activity corresponding to an interface preceding the quickly started target interface to true. In this way, the native system intercepts the starting windows of these activities, thereby avoiding screen flickering when a specific function of the application is quickly started. It should be noted that although the starting windows of the activities are intercepted, the system still loads transitions for these activities, except that there is no starting window and the transition cannot be finally displayed.

In other words, the native system does not support maintenance of a starting window across task stacks, which causes screen flickering. To avoid screen flickering, the application sets a transparency attribute of the activity, so as to intercept the starting window. As a result, a starting window cannot be added when the application is quickly started, or a starting window is added only when the last activity is started. Consequently, a response time of the application depends on a lifecycle of an activity corresponding to an intermediate interface, and a response is relatively slow.

Based on the foregoing analysis, this application provides an application starting method in which a procedure of adding a starting window is additionally added based on a native system. Specifically, when the starting transaction of the first activity of the application is processed (that is, before the first activity is started), a starting window is added. The adding procedure is triggered by the systemserver process and specifically executed by the systemUI process, without participation of the process of the application, and without involvement of the activity of the application. Therefore, the adding procedure is not intercepted by the system due to problems such as a transparency attribute of the activity. A starting window is added before the first activity is started, and a transition page may be displayed after window drawing is completed and transition loading is completed. In this way, display of the transition page does not need to depend on the lifecycle of the activity of the application, thereby greatly shortening a response time of the application, and further advancing a response time of the interface response time, and improving user experience. In addition, when quick starting is identified, each activity and transition of the application are identified. For the first activity, a starting window is added. For an activity following the first activity and preceding the activity corresponding to the target interface, the starting window is successively transferred to these activities. After loading of the activity corresponding to the target interface is completed, the starting window is removed. This ensures continuity of display of the transition page, and prevents screen flickering caused by frequent switching of the starting window.

Based on the software architecture shown in FIG. 4, the following describes improvements to the software architecture used in the embodiments of this application.

It may be understood that each system service running in the systemserver process may be considered as a software module, which can provide a corresponding service and implement a corresponding function. On this basis, each system service may include a module configured to implement some functions (namely, subfunctions) in the system service functions, so as to implement the application starting method in this application. The same is true for other modules. The following describes a functional module that is included in each system service and a related module and that is related to the application starting method provided in this application.

For ease of description, a procedure of a method for quickly starting an application method that can shorten a response time according to an embodiment of this application is referred to as an optimization procedure, and a quick starting function corresponding to the optimization procedure is referred to as an optimized starting function.

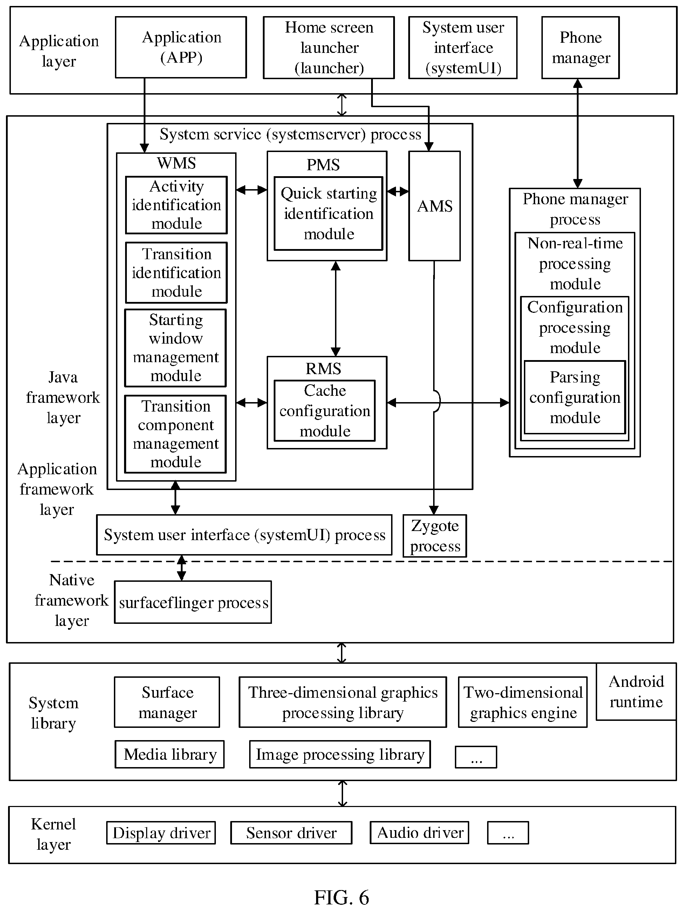

For example, FIG. 6 is another example of a schematic diagram of a software architecture of an electronic device according to an embodiment of this application. Referring to FIG. 6, in this embodiment of this application, a configuration processing module may include a parsing configuration module. The parsing configuration module is configured to read and parse a related configuration of the optimized starting function, including but not limited to a switch of the optimized starting function, a removal delay time of a starting window, a removal delay count threshold, an application type whitelist, a package blacklist, and the like. The switch of the optimized starting function is used to control enabling and disabling of the optimized starting function, that is, control execution and non-execution of the optimization procedure. When the switch is turned on, a system performs the optimization procedure. When the switch is turned off, the system does not perform the optimization procedure but performs a native procedure. The removal delay time of the starting window refers to duration for delaying removing the starting window, that is, how soon the starting window will be removed. The removal delay count threshold refers to a maximum quantity of times that delaying removing the starting window is allowed, for example, 5 times or 8 times. The application type whitelist includes information about an application type that is allowed to be started by using the optimization procedure. The application type whitelist may include, for example, a video application, an audio application, an instant messaging application, and a payment application. The package blacklist includes information about a package of an application that is not allowed to be started by using the optimized procedure. The package blacklist may include, for example, a package a, a package b, a package c, ....

The RMS includes a cache configuration module. The cache configuration module is configured to cache configuration information obtained through parsing by the parsing configuration module, so as to implement support for an optimized starting function.

The PMS may include a quick starting identification module. The quick starting identification module is configured to identify whether the starting of the application is quick starting, that is, whether the application is started in a shortcut manner. In addition, the quick starting identification module is further configured to filter a quickly started application, a function of an application, or the like based on the application type whitelist and the package blacklist that are cached in the cache configuration module, so as to determine whether the current starting meets an execution scenario of the optimization procedure provided in this application.

The WMS may include an activity identification module, a transition identification module, a starting window management module, and a transition component management module. The activity identification module is configured to identify each activity that is requested to be loaded in an application starting process, so as to determine whether each activity is the first activity or another activity in a quick starting scenario. The transition identification module is configured to identify each transition loaded by the WMS, so as to determine whether each transition is a first transition (also referred to as a first transition component) or another transition in the quick starting scenario. The starting window management module is configured to manage the starting window based on the identification results of the activity identification module and the transition identification module, including but not limited to requesting to add a starting window, transfer a starting window, remove a starting window, and so on. The transition component management module is configured to manage the transition, including but not limited to creating a transition, controlling an execution occasion of the transition, setting a parameter of the transition, and so on. The parameter of the transition may include, for example, a motion attribute. If the motion attribute is set to "yes" (for example, true), the transition is displayed in a motion form, that is, there is a motion. If the motion attribute is set to "no" (for example, false), the transition is not displayed in the motion form, that is, there is no motion.

By using the electronic device with the structure shown in FIG. 3 and FIG. 6 as an example, the following describes in detail the application starting method provided in the embodiments of this application with reference to the accompanying drawings and application scenarios.

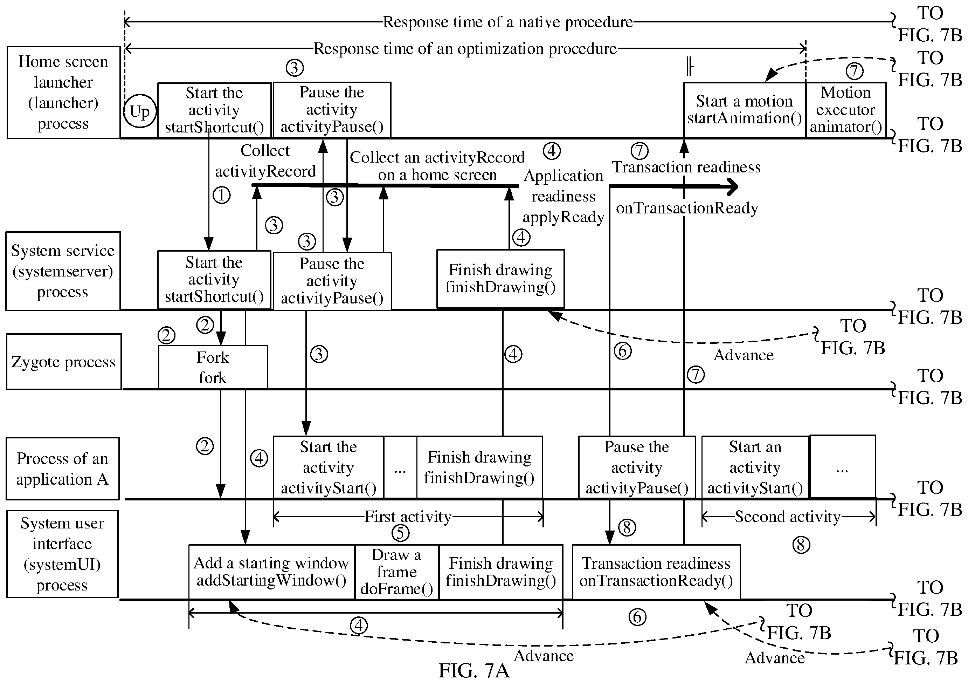

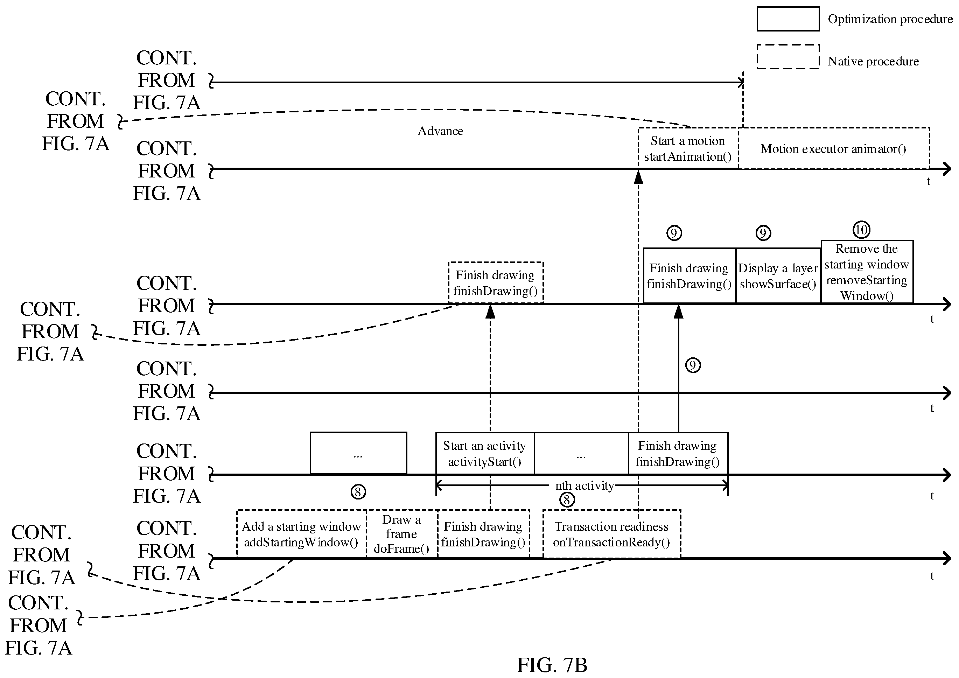

FIG. 7A and FIG. 7B are examples of a schematic diagram of a time sequence of an application starting method according to an embodiment of this application. As shown in FIG. 7A and FIG. 7B, still in an example in which a function a of an application A is cold started in a shortcut manner, a starting process includes:
① In response to occurrence of a lifting (up) event in a quick starting operation, a launcher process invokes a startShortcut() function to send a starting message to a systemserver process.
② In response to the starting message, the systemserver process requests a Zygote process to fork a process of the application A, and in response to the request, the Zygote process forks the process of the application A.
③ The systemserver process processes a starting transaction of a first activity, and the systemserver process collects an activityRecord corresponding to the first activity of the application A. Then, the systemserver process invokes an activityPaused() function to notify an activity in the launcher process to enter a paused (pause) state, and indicates the process of the application A to execute a lifecycle of the first activity. In addition, the systemserver process collects the activityRecord of the launcher.
④ After processing the starting transaction of the first activity, the systemserver process notifies a systemUI process to add a starting window. The systemUI process invokes an addStartingWindow() function to create a starting window, uses a doFrame() function to draw a view of the starting window, and then uses a finishDrawing() function to indicate to complete drawing of the starting window. After the systemserver process determines that the drawing of the starting window is completed, the application is ready (applyReady).
⑤ At the same time when the systemUI process creates the starting window, the process of the application A executes the lifecycle of the first activity in response to the indication of the systemserver process.
⑥ After determining that the drawing of the starting window is completed, the systemserver process notifies the systemUI process to execute transaction readiness. The systemUI process executes the transaction readiness by using an onTransactionReady() function.
⑦ After the execution of the transaction readiness is completed, the systemUI process notifies the launcher process to execute a motion. The launcher process starts the motion by using the startAnimation() function and executes the motion by using an animator() function, that is, executes the transition to display a transition page.
⑧ In the process of executing the lifecycle of the first activity, the process of the application A invokes the startActivity() function to request the systemserver process to start a second activity (not shown in FIG. 7A and FIG. 7B). The systemserver process processes the starting request of the second activity and collects a collect activityRecord (not shown in FIG. 7A and FIG. 7B) corresponding to the second activity. After determining that the process of the application A finishes executing the lifecycle of the first activity, the systemserver process invokes the activityPaused() function to notify the process of the application A to pause the first activity, and indicate the process of the application A to execute a lifecycle of the second activity. By analogy, a third activity, ..., and an nth activity of the application A are executed.
⑨ After determining that the process of the application A finishes executing the lifecycle of the nth activity, the systemserver process invokes a showSurface() to display a layer corresponding to the nth activity, that is, display a target interface a.
⑩ The systemserver process invokes a removeStartingWindow() function to remove the starting window, and displays an interface of the application A in a window of the application A.

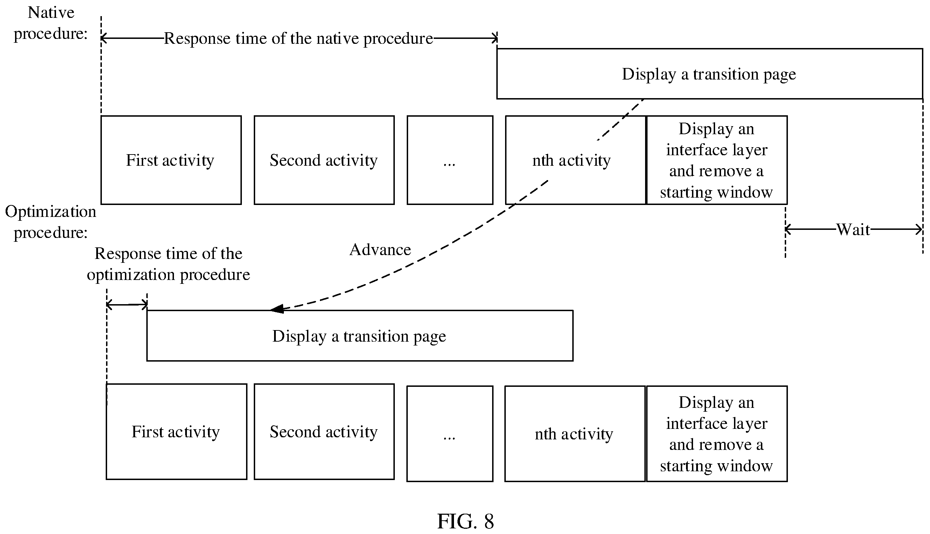

In comparison with FIG. 5A, FIG. 5B, FIG. 7A, and FIG. 7B, and with reference to FIG. 8, it can be learned that in the native procedure, after the process of the application A requests to start the nth activity, the starting window is added. Therefore, addition of the starting window and display of the transition page need to depend on the lifecycle of the activity of the intermediate interface of the application after the preceding n-1 activities are started. However, in the optimization procedure, in the process in which the systemserver process processes the starting transaction of the first activity of the application A, that is, at the same time when the systemserver process starts the first activity, the starting window is added. After the starting window is added and the drawing of the starting window is completed, the transaction readiness phase is entered, and the transition page is displayed after the systemUI process executes the onTransactionReady() function. An entire process of adding the starting window and displaying the transition page may be performed in synchronization with executing the lifecycle of the activity by the process of the application A, without depending on the lifecycle of the activity of the application A, thereby greatly shortening a response time. To put it simply, the optimization procedure is equivalent to advancing the execution occasion of step ⑨ in the native procedure from the time of starting the nth activity to the time of starting the first activity, and also advancing subsequent steps ⑪ and ⑫ successively, so that a response time is greatly shortened, and user experience is effectively improved.

Still referring to FIG. 5A, FIG. 5B, FIG. 7A, FIG. 7B, and FIG. 8, on the other hand, in the native procedure, an interface of an application is displayed when execution of a motion is not completed. However, the interface of the application cannot respond to an operation of a user, and user experience is poor. In the optimization procedure, the motion is executed earlier, and the execution of the motion can be performed concurrently with the process of loading the activity of the application A. Therefore, the execution of the motion can be completed earlier, and a user operation can be responded when loading of the activity of the application is completed and an interface starts to be displayed, and the user does not need to wait, thereby improving user experience.

The foregoing provides an overview of the optimization procedure with reference to the accompanying drawings, so as to describe, from a perspective of a time sequence, how to shorten a response time by using the method provided in this application. The following further describes a specific implementation process of the optimization procedure with reference to FIG. 6, so as to explain execution details of the procedure, and describe how to transfer and manage a starting window after the starting window is added, and how to manage a transition, so as to improve smoothness of the display of the transition page, and the like.

First, a process in which a parsing configuration module in a phone manager process parses a related configuration of an optimized starting function is described.

The parsing configuration module is initialized when an electronic device is powered on, and reads and parses the related configuration of the optimized starting function. Optionally, a name of the related configuration of the optimized starting function may be, for example, "AwareAddStartWindow". A type (type) corresponding to the function, a switch (switch) of the optimized starting function, a removal delay time (delayTime) of the starting window, a removal delay count threshold (delayCount), an application type whitelist (also referred to as a support type supportType), a package blacklist (pkgBlacklist), and the like may be obtained through parsing.

It may be understood that when a type of an application belongs to the application type whitelist, and a package of the application is not in the package blacklist, it indicates that the application is applicable to an optimization procedure and may be quickly started by using the optimization procedure. Otherwise, it indicates that the application is not applicable to the optimization procedure and may be started by using a native procedure.

The parsing configuration module caches a parsing result in an RMS in a systemserver process. When the switch of the optimized starting function is turned on, the optimization procedure runs. During the running of the optimization procedure, each module may obtain a corresponding parameter from the RMS as required.

The following describes the implementation of the optimization procedure. In the embodiments, quick starting of the application A is still used as an example for description. In the following description, the process of forking the process of the application A is not described again. In addition, for ease of understanding, the method provided in the embodiments of this application is described according to a process of starting a first activity of an application (referred to as a first phase) and a process of starting a second activity and subsequent activities (referred to as a second phase).

### 1. First phase

The first phase includes starting of the first activity of the application. Before the first activity of the application is started, a quick starting scenario is identified, and when a starting transaction of the first activity is processed, the first activity is identified, so as to determine that a to-be-started activity is the first activity of the application in the quick starting scenario, thereby accurately adding a starting window for the first activity. In addition, a first transition is identified, so as to set an attribute of the first transition, thereby improving a display effect of a transition page. The following provides description with reference to the accompanying drawings.

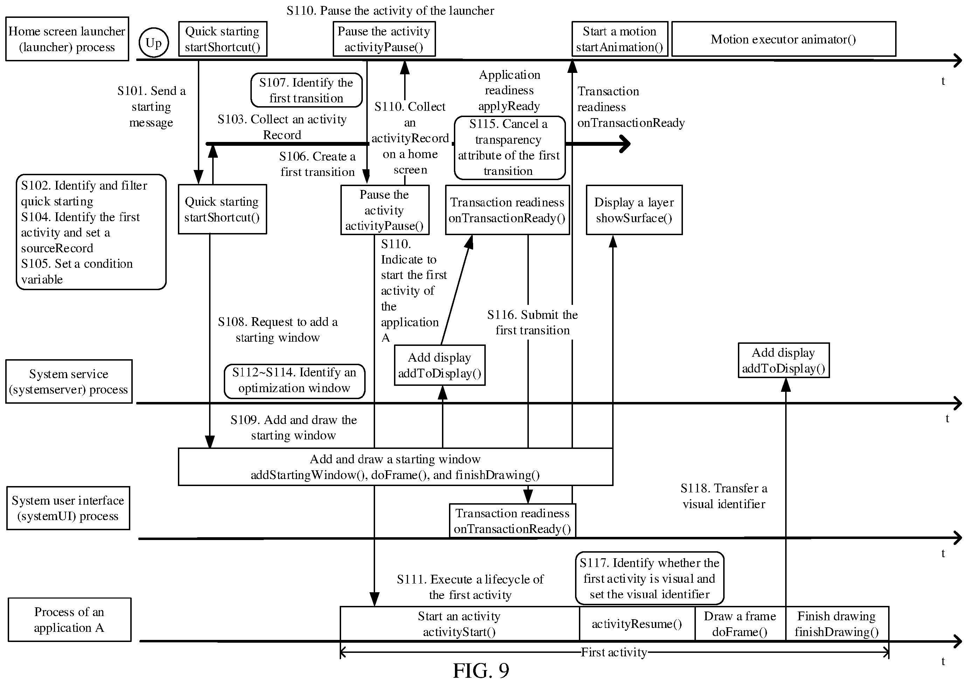

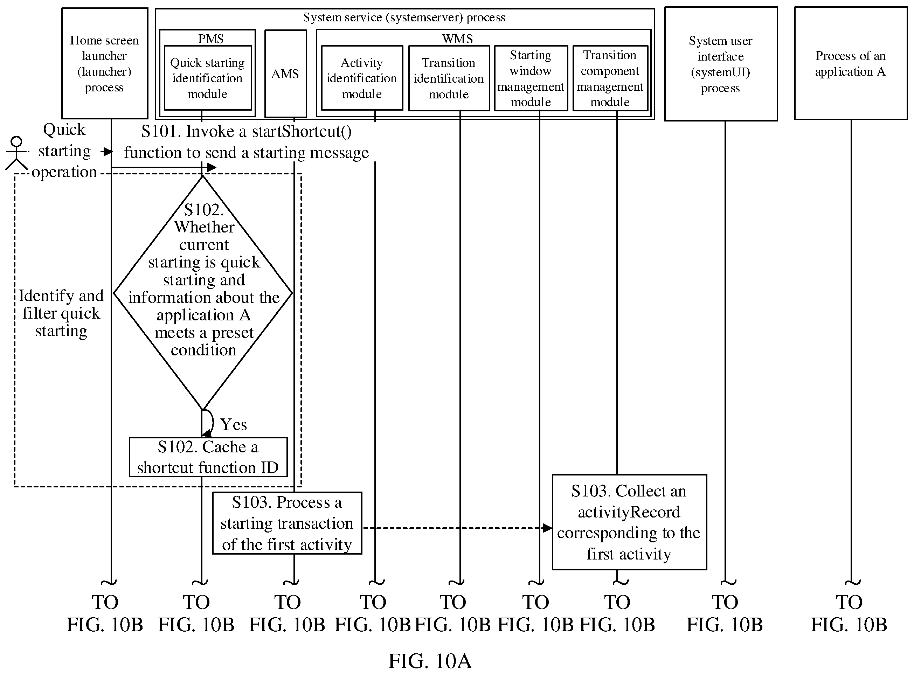

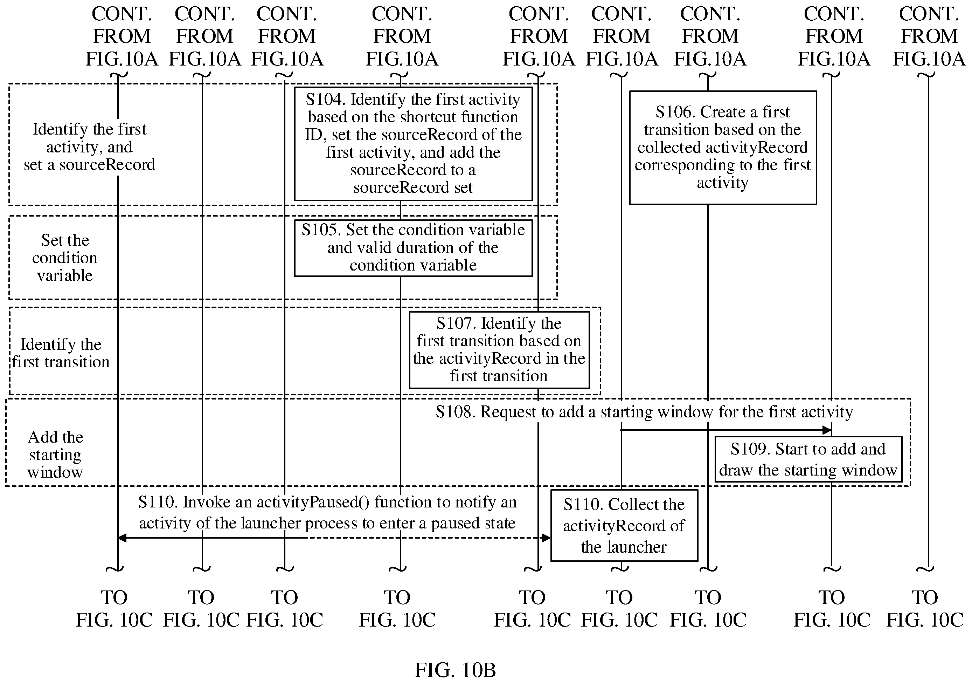

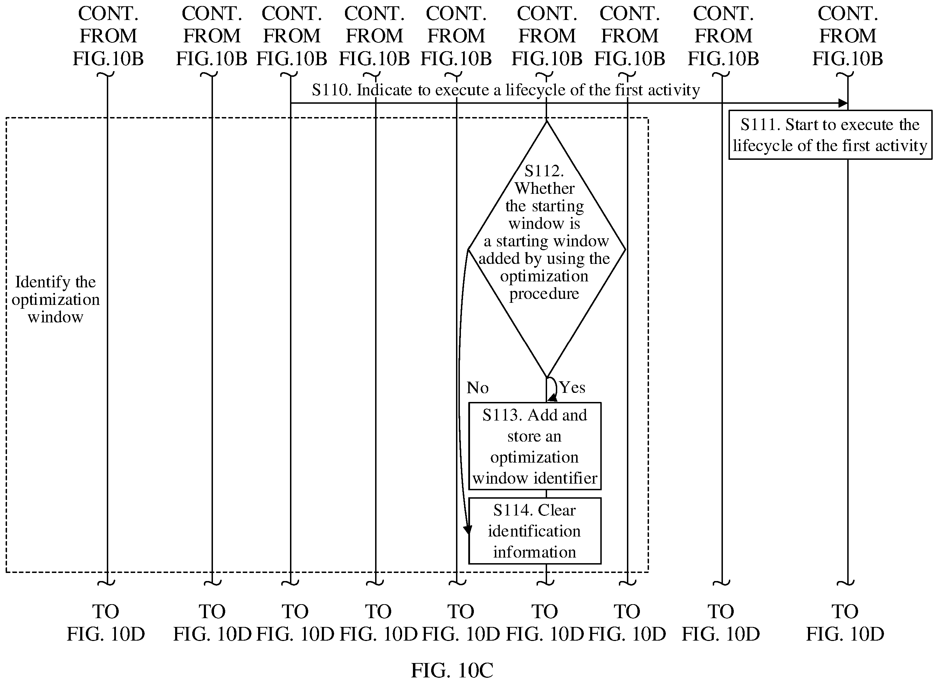

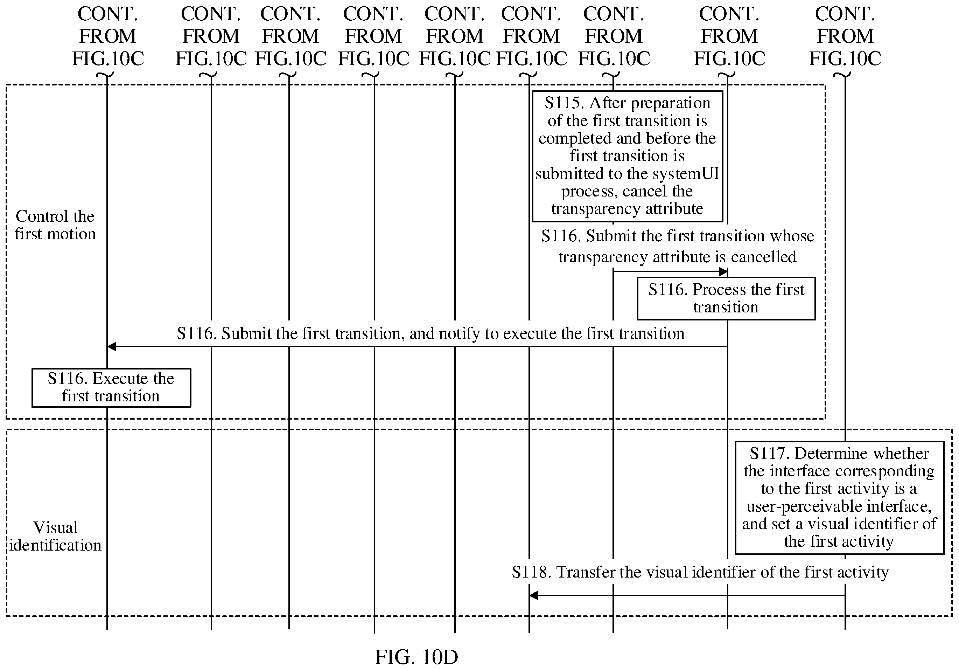

FIG. 9 is another example of a schematic diagram of a time sequence of an application starting method according to an embodiment of this application. FIG. 10A to FIG. 10D are examples of a schematic flowchart of an application starting method according to an embodiment of this application. Referring to FIG. 9 and FIG. 10A to FIG. 10D together, the method includes:
S101: In response to occurrence of a lifting (up) event in a quick starting operation, a launcher process invokes a startShortcut() function to send a starting message to a systemserver process.

Optionally, the starting message carries information about the to-be-started application (the application A) and information about the to-be-started function (the function a). In this embodiment, that the information about the to-be-started function is a shortcut function ID is used as an example for description.

Optionally, the launcher process may also transfer the information about the to-be-started application and the shortcut function ID to the systemserver process by using an intent (intent).

S102: A quick starting identification module in a PMS of the systemserver process responds to the starting message, and if it is determined that the current starting is quick starting, and information about the application A meets a preset condition, stores the shortcut function ID in a cache.

Determining whether the application meets the preset condition is essentially also filtering the application. Therefore, this step may be simply referred to as identifying and filtering quick starting.

Optionally, the quick starting identification module may determine, based on whether the starting message carries the shortcut function ID, whether the current starting is quick starting. Specifically, the quick starting identification module responds to the starting message and obtains the information about the application and the shortcut function ID from the intent. If the shortcut function ID is obtained from the intent, it indicates that the current starting is quick starting, that is, the current scenario is a quick starting scenario; otherwise, it indicates that the current starting is not quick starting, and the current scenario is not a quick starting scenario.

For example, the preset condition may include: A type of the application A is in the application type whitelist, and a package of the application A is not in the package blacklist. Specifically, when it is determined that the current starting is quick starting, the quick starting identification module may obtain the application type whitelist and the package blacklist from the configuration cache module, determine, based on the information about the application A carried in the starting message, whether the type of the application A is in the application type whitelist, and determine whether the package of the application A is in the package blacklist, so as to determine whether the application A meets the preset condition. If the type of the application A is in the application type whitelist, and the package of the application A is not in the package blacklist, it is determined that the information about the application A meets the preset condition. Otherwise, it indicates that the information about the application A does not meet the preset condition.

If the current starting is quick starting, and the information about the application A meets the preset condition, it indicates that the current scenario is a quick starting scenario, and in the current scenario, quick starting may be performed according to an optimization procedure, so that the shortcut function ID is stored in a cache of the systemserver process. In this way, in one aspect, the shortcut function ID in the cache is used as an identifier of the scenario, and is used to mark that in the current scenario, quick starting may be performed by using the optimization procedure. In another aspect, the shortcut function ID in the cache is used as an identifier of the first activity, and is used to mark the to-be-started activity at the current moment as the first activity of the application A. It should be noted that in some other embodiments, the content of the foregoing two aspects may alternatively be marked by using other identification information, for example, a preset character, a preset number, or a preset text. This is not limited in this embodiment of this application, and may be set according to an actual requirement.

If the current starting is not quick starting, and/or the information about the application A does not meet the preset condition, it indicates that in the current scenario, performing quick starting by using the optimization procedure is not applicable, and therefore the shortcut function ID is not cached. In a subsequent procedure, when the shortcut function ID cannot be identified from the cache, the procedure automatically proceeds to the native procedure for execution.

In this step, quick starting is identified, so that the scenario of the optimization procedure is limited to the quick starting scenario, thereby improving accuracy of procedure execution. In addition, the application type whitelist and the package blacklist are set, so that applications that are not applicable to the optimization procedure can be filtered out, thereby preventing these applications from entering the optimization procedure and thus preventing incapability of execution. Use of the native procedure ensures normal starting of these applications.

In some other embodiments, in a process of executing the optimization procedure, shortcut function IDs encountering abnormal starting may be collected, and these shortcut function IDs may be added to a function blacklist. In this case, the preset condition may further include: The shortcut function ID is not in the function blacklist. The shortcut function ID is not in the function blacklist, which further indicates that the function a of the application A is applicable to quick starting by using the optimization procedure, and the shortcut function ID is cached. In this way, a to-be-started function that is not applicable to the optimization procedure is further filtered out, thereby preventing an error in quick starting and improving user experience.

S103: The AMS in the systemserver process starts to process the starting transaction of the first activity, and a transition component management module in the WMS of the systemserver process collects an activityRecord corresponding to the first activity.

S104: An activity identification module in the WMS identifies the first activity based on the shortcut function ID, and after identifying the first activity, sets a value of a source record (sourceRecord) (also referred to as a first sourceRecord) of the first activity to an activityRecord corresponding to the first activity, and adds the first sourceRecord to a sourceRecord set.

This step may be simply referred to as identifying the first activity and setting the sourceRecord.

Specifically, the activity identification module reads the shortcut function ID from the cache, and if the reading succeeds, determines that the currently started activity is the first activity started in the quick starting scenario, that is, identifies the first activity. Optionally, the activity identification module may add an identifier for the first activity to represent that the activity is the first activity. This helps subsequently quickly determine whether the activity is the first activity. The identifier of the first activity may be, for example, "first".

After the first activity is identified, the activity identification module sets the value of the first sourceRecord to the activityRecord corresponding to the first activity, and adds the first sourceRecord to the sourceRecord set.

The sourceRecord is used to indicate a starting source of the activity, that is, start a previous activity of the currently started activity. In this embodiment of this application, a corresponding sourceRecord is set for each activity, and a value is assigned to the sourceRecord. A set formed by sourceRecords corresponding to a plurality of activities is referred to as a sourceRecord set.

Specifically, after the first activity is identified, a value is assigned to a sourceRecord (namely, the first source record) corresponding to the first activity. Optionally, the value of the sourceRecord corresponding to the first activity may be set to an activityRecord thereof (of the first activity). For any activity started following the first activity, an operation of transferring a value of the sourceRecord is performed. For ease of description, the next to-be-started activity is referred to as a new activity. The activity requesting to start the new activity is referred to as an old activity or a source activity. In a specific embodiment, the old activity transfers the value of the sourceRecord to the new activity, that is, the sourceRecord of the old activity is used as the value of the sourceRecord of the new activity. In this way, the old activity that starts the new activity may be determined by using the value of the sourceRecord.

In this embodiment, each activity is identified, and a value is assigned to a corresponding sourceRecord that is set for each activity. In one aspect, the sourceRecord is subsequently easily used as a basis for transferring a starting window. Specifically, the value of the sourceRecord of the new activity may be obtained. In most cases, the old activity corresponding to the value is the activity that currently holds the starting window. Therefore, the activity that holds the starting window may be found based on the value of the sourceRecord, so that the starting window can be obtained from the activity and transferred to the activity that requests to be started. The transferring of the starting window is further described in step S208 in subsequent embodiments.

In another aspect, in the optimization procedure of this solution, each activity is identified, and a corresponding sourceRecord is set for the activity. This process is not included in the native procedure. In this case, on the contrary, if a sourceRecord exists in the sourceRecord set, the sourceRecord is set in the optimization procedure of this solution, which indicates that the current scenario is a quick starting scenario, and at least the first activity is currently started. Therefore, in a subsequent procedure, the sourceRecord is also used as a basis for identifying another activity following the first activity. Specifically, if the sourceRecord exists in the sourceRecord set, it indicates that the currently started activity is a second activity or an activity (referred to as another activity) following the second activity in the quick starting scenario. The another activity is further described in step S205 in subsequent embodiments.

In some embodiments, in the case of starting across processes, for example, starting an applet in WeChat^{®}, or in some other special scenarios, when a specific activity is requested to be started, if the activity has been started, the system reuses the started activity. In this case, the activity that holds the starting window is essentially not the old activity that requests to start the new activity, but the reused activity. In this case, when the operation of transferring the value of the sourceRecord is performed according to the foregoing logic, the transferred value may be empty. The transferred value being empty may cause a failure of subsequently transferring the starting window or a failure of subsequently identifying the activity, which further results in a failure of executing the optimization procedure. For this case, in an optimization solution, when a new activity is started, if a transferred value of the sourceRecord is empty, and an activity that holds a starting window exists in a collected sourceRecord set, it indicates that the activity involves a special scenario such as cross-process starting, and therefore, an activityRecord corresponding to the activity that holds the starting window may be used as the value of the sourceRecord of the new activity. This ensures correct assignment of a value to the sourceRecord, prevents a failure of subsequently transferring the starting window or a failure of subsequently identifying the activity, and ensures reliability of the optimization procedure.

Certainly, in some other embodiments, a value may alternatively be assigned to the sourceRecord of each activity in another manner. This is not limited in this embodiment of this application.

S105: The activity identification module in the WMS of the systemserver process sets a condition variable and valid duration of the condition variable.

This step may be simply referred to as setting a condition variable.

The condition variable is used to limit an occasion for starting a second activity of the application A, so as to prevent the starting of the second activity from affecting the loading of the first transition, and further affecting the display of the transition page.

Optionally, the condition variable may include two condition variables: a condition variable 1 and a condition variable 2. The condition variable 1 is that the first transition has been submitted to the systemUI process. The condition variable 1 represents that the first transition has been handed over to the systemUI process for processing, and processing of the first transition no longer occupies the systemserver process. Therefore, starting the second activity of the application A and creating a second transition (also referred to as a second transition component) do not affect the loading of the first transition, and therefore do not affect the display of the transition page. The condition variable 2 is that the layer display (showSurface) of the starting window is completed. The layer display of the starting window is completed, and processing of the starting window of the first activity no longer occupies the systemserver process. Therefore, starting the second activity of the application A and creating a second transition do not affect the loading of the first transition, and therefore do not affect the display of the transition page.

The valid duration of the condition variable represents how long the condition variable is valid after the setting moment. For example, the condition variable may be 20 ms, which indicates that the condition variable is valid within 20 ms after the moment at which the condition variable is set.

If the condition variable is unlocked within the valid duration, processing of the starting request for the second activity of the application A is triggered. In this way, processing of the transition page is not affected, so that the transition page can be displayed as soon as possible, thereby minimizing a response time of quick starting of the application.

If the condition variable is not unlocked within the valid duration, the condition variable is automatically unlocked when the valid duration expires. This can avoid a case that the condition variable always cannot be unlocked due to abnormal procedure execution, and consequently a subsequent activity always cannot be started, thereby improving system stability.

For unlocking of the condition variable and a procedure after unlocking, refer to steps S202 to S204 in subsequent embodiments.

S106: The transition component management module in the WMS of the systemserver process creates a first transition based on the collected activityRecord corresponding to the first activity.

S107: The transition component identification module in the WMS of the systemserver process identifies the first transition based on the activityRecord in the first transition.

This step may be simply referred to as identifying the first transition.

Specifically, in the foregoing step S104, the activity identification module has identified the first activity. Therefore, the transition component identification module determines whether the activityRecord collected in the current transition is the corresponding activityRecord of the first activity, and may further determine whether the current transition is the first transition.

Optionally, the transition component identification module may add a transition identifier 1 for the identified first transition, where the transition identifier 1 is used to represent that the transition is the first transition.

S108: The starting window management module in the WMS of the systemserver process requests the systemUI process to add a starting window (also referred to as a first starting window) for the first activity.

In a possible implementation, after the first transition is identified and before the systemUI process is requested to add the starting window (that is, after step S107 and before step S108), the activity identification module in the WMS of the systemserver process may further perform step S104 again, that is, identify the first activity, and set the sourceRecord corresponding to the first activity. As described above, in some cases, the system may reuse the activity, and therefore the first activity may be the reused activity. After the first transition is identified, and before the starting window is requested to be added, the systemserver process performs step S104 again, so that the first activity can be further accurately identified, thereby further ensuring correct assignment of a value to the sourceRecord, preventing a failure of subsequently transferring the starting window or a failure of subsequently identifying the activity, and ensuring reliability of the optimization procedure.

S109: The systemUI process starts to add and draw a starting window in response to the request of the starting window management module.

Specifically, the systemUI process invokes an addStartingWindow() function to create a starting window, and uses a doFrame() function to draw a frame of the starting window. After the drawing of the frame is completed, the systemUI process requests the WMS in the systemserver process to add display for the starting window.

After the drawing of the starting window is completed, the systemUI process invokes a finishDrawing() function to indicate to the systemserver process that the drawing of the starting window is completed. The WMS in the systemserver process displays a layer of the starting window by using a showSurface().

Steps S108 and S109 may be simply referred to as adding the starting window.

S110: The AMS in the systemserver process invokes an activityPaused() function to notify an activity of the launcher process to enter a paused state, and indicates the process of the application A to execute a lifecycle of the first activity. The transition component management module in the WMS of the systemserver process collects the activityRecord of the launcher.

It may be understood that step S110 may be performed after the foregoing steps S102 to S109, or may be performed in synchronization with the foregoing steps S102 to S109.

S111: The process of the application A starts to execute the lifecycle of the first activity in response to the indication of the AMS.

S112: After the systemUI process starts to add the starting window, the starting window management module identifies whether the starting window is the starting window added by using the optimization procedure. If yes, step S113 is performed. If no, step S114 is performed.

S113: The starting window management module adds an optimization window identifier for the starting window, and stores the optimization window identifier in the cache. An optimized starting mark is used to represent that the currently added starting window is the starting window added by using the optimization procedure.

S114: The starting window management module clears identification information added by using the optimization procedure.

The foregoing steps S112 to S114 may be simply referred to as identifying the optimization window.

According to the analysis in the foregoing embodiment, when the activity of the application is started, the native system may add a starting window for the activity. If the application sets a transparency attribute for the activity, or when the application sets code for refusing to add a starting window, or in a similar case, the native system fails to add a starting window. However, in actual use, if an actual service of the application needs to add a starting window for the first activity, the application no longer sets a transparency attribute for the activity in this case. In this way, the procedure of the native system can successfully add a starting window for the first activity. In this case, the optimization procedure of this application needs to be discarded, and the native procedure runs, so as to prevent disruption of the original starting logic of the application.

On this basis, in this embodiment, after the starting window starts to be added, whether the starting window is the starting window added in the optimization procedure is further identified. If the starting window is the starting window added in the optimization procedure, an optimization window identifier is added. The optimization window identifier may be subsequently used as a basis for determining whether to remove the starting window. For details, refer to subsequent steps S209 to S212. If the starting window is not the starting window added in the optimization procedure, all mark information added by using the optimization procedure is cleared, including but not limited to a shortcut function ID, a sourceRecord set, a condition variable, valid duration of the condition variable, and the like. In addition, if identifiers are added after the first activity and the first transition are identified, these identifiers are also cleared. In this way, a subsequent procedure enters the native procedure, so as to prevent disruption of the original starting logic of the application, improve accuracy of execution of the optimization procedure, and further improve stability of system running.

It may be understood that, regardless of whether the starting window is a window added in the optimization procedure, a starting window continues to be added and drawn subsequently. To be specific, after steps S113 and S114, the starting window continues to be added and drawn. A difference lies in that after S113, another step of the optimization procedure continues to be performed, and after S114, execution is performed according to the native procedure.

A specific method for identifying whether the first starting window is the starting window added in the optimization procedure is further described in a subsequent embodiment.

S115: In response to the request of the systemUI process, the WMS in the systemserver process invokes an addToDisplay() function to add display for the starting window. After adding display for the starting window is completed, application readiness (applyReady) is triggered. The transition component management module in the WMS prepares the first transition. After the preparation of the first transition is completed and before the first transition is submitted to the systemUI process, the transition component management module in the WMS cancels the transparency attribute of the first transition.

Before the first transition being submitted to the systemUI process means before the systemserver process requesting the systemUI process to execute transaction readiness (onTransactionReady).

Specifically, as described above, after finishing drawing the frame of the starting window by using the doFrame() function, the systemUI process requests the WMS in the systemserver process to add display for the starting window. In response to the request of the systemUI process, the WMS in the systemserver process invokes the addToDisplay() function to add display for the starting window. After adding display for the starting window is completed, the WMS is triggered to enter the application readiness (applyReady) phase. The WMS prepares the transition. After the preparation of the transition is completed, the WMS executes application transaction readiness (AppTransitionReady), and then submits the transition to the systemUI process for processing. In other words, adding display (addToDisplay) for the starting window triggers the transitionReady. Therefore, before completion of the drawing (finishDrawing) of the starting window, the transitionReady phase is already entered. However, in the native procedure, the transitionReady is triggered by the finishDrawing of the starting window. In other words, the optimization procedure advances the transitionReady, so that the transitionReady is located between a moment for adding a starting window (addStartingWindow) and a moment for finishing drawing (finishDrawing) a starting window. In this way, display of a motion is further advanced, thereby further shortening a response time in the case of quick starting of the application, and improving user experience.

It should be noted that advancing the triggering of the transitionReady may be performed as an optional solution. In some other embodiments, as shown in FIG. 7A and FIG. 7B, the transitionReady may alternatively be triggered by completion of drawing of the starting window. This is not limited in this embodiment of this application.

Canceling the transparency attribute of the transition may be, for example, setting the value of the transparency attribute of the transition to false.

S116: The transition component management module in the WMS of the systemserver process submits the first transition whose transparency attribute is cancelled to the systemUI process for processing. The systemUI process performs processing, and after the processing is completed, submits the first transition whose transparency attribute is cancelled to the launcher process, notifying the launcher process to execute the first transition. The launcher process executes the first transition to display the transition page.

Steps S115 and S116 may be simply referred to as controlling the first motion.

Specifically, the transition component management module submits the first transition whose transparency attribute is cancelled to the systemUI process for processing, and invokes the onTransactionReady() function to request to execute the transaction readiness. The systemUI process invokes the onTransactionReady() function to execute the transaction readiness. After the execution of the transaction readiness is completed, the systemUI process submits the first transition to the launcher process, notifying the launcher process to execute the transition. The launcher process starts the motion by using the startAnimation() function and executes the motion by using an animator() function, to display a transition page.

If the transition has a transparency attribute, the system cannot make an icon enlargement motion. Therefore, in this step, the transparency attribute of the first transition is cancelled. In this way, the transition whose transparency attribute is removed is transferred and submitted to the systemUI process for processing, and then further submitted to the launcher process. Therefore, the launcher process can perform the icon enlargement motion, thereby improving a motion effect and improving visual experience of the user.

S117: In the process of executing the lifecycle of the first activity, in the activityResume phase, the process of the application A determines whether an interface corresponding to the first activity is a user-perceivable (namely, visual) interface, and sets a visual identifier of the first activity based on a determining result.

Specifically, if any one of the following condition 1 and condition 2 is met, it may be determined that the interface corresponding to the first activity is a user-perceivable interface. Condition 1: It is determined that a custom layout of the activity includes at least one view (view). Condition 2: It is determined that a background layout exists and transparency is not 0.

The visual identifier is used to identify whether the interface corresponding to the activity is visual, that is, whether the interface is a user-perceivable interface. The visual identifier may be "no" (for example, false) by default. If it is determined that the interface corresponding to the first activity is a user-perceivable interface, the visual identifier is set to "yes" (for example, true, also referred to as a value of the visual identifier being a first value). If it is determined that the interface corresponding to the first activity is an interface that the user cannot perceive, the visual identifier is kept to be no.

The visual identifier may be used as a basis for determining whether to remove the starting window in a subsequent procedure. Specifically, if the visual identifier is "yes", it indicates that the interface corresponding to the activity is a user-perceivable interface. Therefore, the interface needs to be normally displayed, and the starting window needs to be removed. Details are further described in a subsequent embodiment.

It may be understood that step S117 may be performed by a functional module running in a system framework in the process of the application A. In other words, in this application, a module for determining whether the activity is visual may be added to an application layer on a system side, without changing execution logic of the application A. In this way, maintenance is convenient, and security of the application and the system can be improved.

S118: In the process of executing the lifecycle of the first activity, in a phase of requesting the WMS in the systemserver process to add display (addToDisplay), the process of the application A transfers the visual identifier of the first activity together with a parameter to the WMS, and a starting window management module in the WMS stores the visual identifier in the activityRecord corresponding to the first activity.

Steps S117 and S118 may be simply referred to as visual identification.

Optionally, when creating a window state (WindowState), the WMS may store the visual identifier in the activityRecord corresponding to the first activity.

The following describes the process of identifying the starting window added in the optimization procedure.

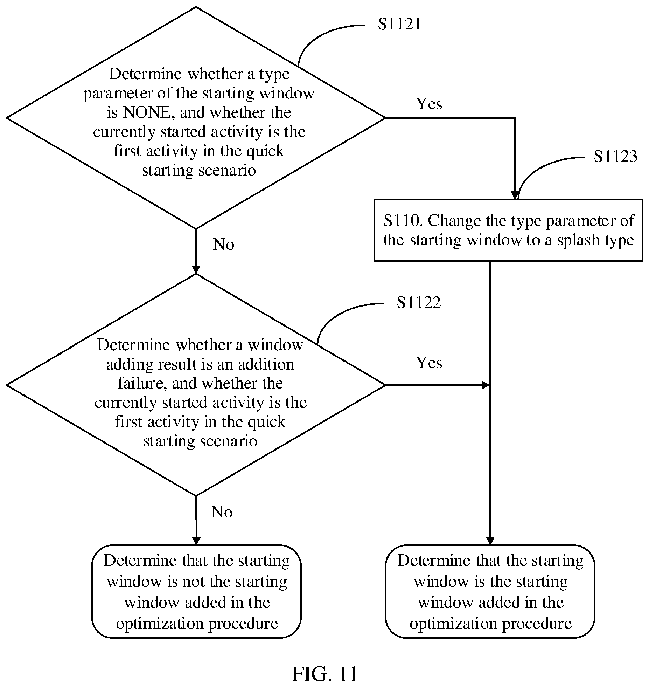

Referring to FIG. 11, in an embodiment, the foregoing step S112 "After the systemUI process starts to add the starting window, the starting window management module identifies whether the starting window is the starting window added in the optimization procedure" includes:
S1121: Determine whether a type parameter of the starting window is none (NONE, also referred to as a first type), and whether the currently started activity is the first activity in the quick starting scenario. If yes, it is determined that the starting window is the starting window added in the optimization procedure. If no, step S1122 is performed.

In the native procedure, a type parameter is set for the starting window. The type parameter of the starting window represents a type of the added starting window. Optionally, the type of the starting window may be a snapshot (snapshot) type or a splash (splash) type. When the starting window is added, the type parameter is set to one of the foregoing two types as required. When the system does not need to add a starting window for a specific activity, the type parameter may be set to NONE. In other words, when the type parameter of the starting window is NONE, it represents that the native procedure does not add the starting window for the activity. In this case, if it is further determined that the currently started activity is the first activity in the quick starting scenario, it indicates that the current starting window is the starting window added in the optimization procedure in this application.

As described in the foregoing embodiment, whether the currently started activity is the first activity in the quick starting scenario may be determined by determining whether the cache includes the shortcut function ID.

S1122: Determine whether a window adding result is an addition failure (also referred to as a first result), and whether the currently started activity is the first activity in the quick starting scenario. If yes, it is determined that the starting window is the starting window added in the optimization procedure. If no, it is determined that the starting window is not the starting window added in the optimization procedure.

The window adding result is used to represent a result of adding a starting window in the native procedure. The window adding result may be an addition success or an addition failure. The addition success may be, for example, represented by returning a true value, and the addition failure may be, for example, represented by returning a false value.

As described above, when the native system adds a starting window for the activity, if the activity has a transparency attribute, or the application sets code for refusing to add a starting window, or in a similar case, the native system fails to add a starting window, and returns a "false" value. In this case, if it is further determined that the currently started activity is the first activity in the quick starting scenario, it indicates that the current starting window is the starting window added in the optimization procedure in this application.

Otherwise, it indicates that the current starting window is not the starting window added in the optimization procedure.

In this embodiment, whether the starting window is added in the optimization procedure can be accurately determined by using the type parameter of the starting window and the window adding result, thereby improving accuracy of executing the optimization procedure, and improving system stability.

Referring to FIG. 11, in an embodiment, if a determining result of step S1121 is "yes", step S1123 is performed.

S1123: Change the type parameter of the starting window to the splash type.

To be specific, if the starting window is not added in the native procedure, and the starting window is the starting window added in the optimization procedure, the type parameter of the starting window is corrected to the type of the starting window added in the optimization procedure. This ensures accurate addition of a subsequent starting window. In addition, the type parameter of the starting window is set to the splash type. Compared with the snapshot type, the starting window is not only applicable to hot start, but also applicable to cold start, thereby expanding an applicable scope of the optimization procedure.

### 2. Second phase

In the second phase, a second activity and subsequent activities of the application are started successively, and the foregoing added starting window is successively transferred to these activities. In addition, when drawing of an activity is completed (finishDrawing), whether to remove the starting window is determined based on a visual identifier of the activity. In addition, an attribute of the transition is managed. The foregoing several measures can be used to ensure that a transition page is stably and smoothly displayed without a phenomenon such as screen flickering, thereby further improving visual experience of the user. The following provides description with reference to the accompanying drawings.

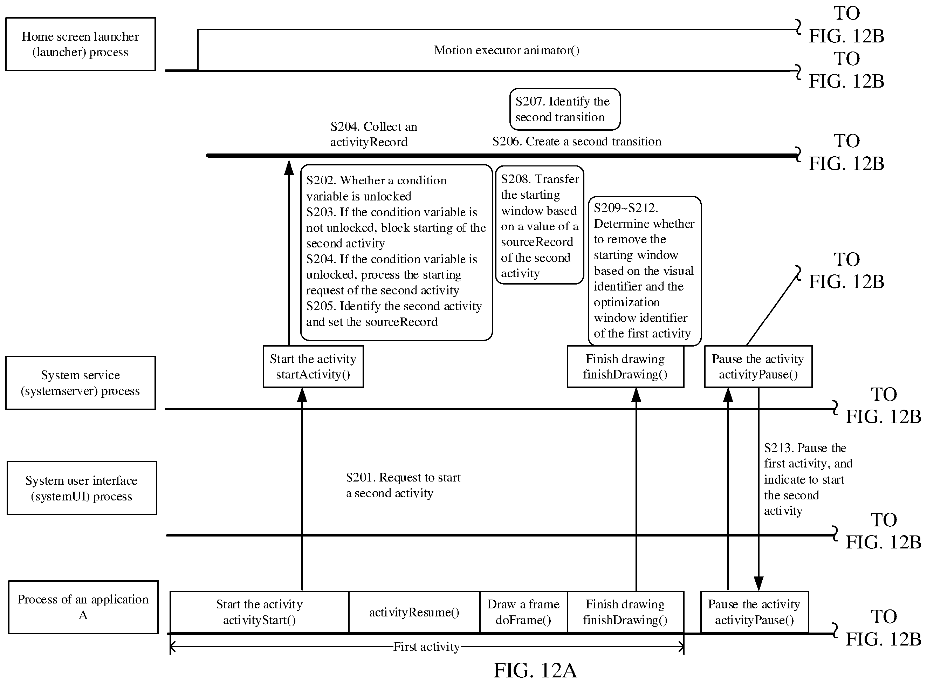

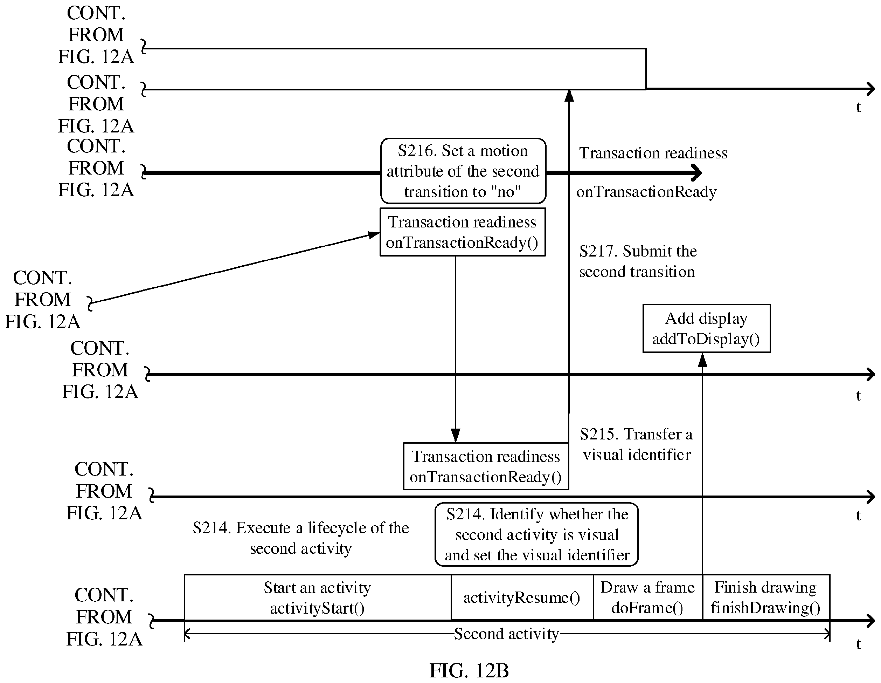

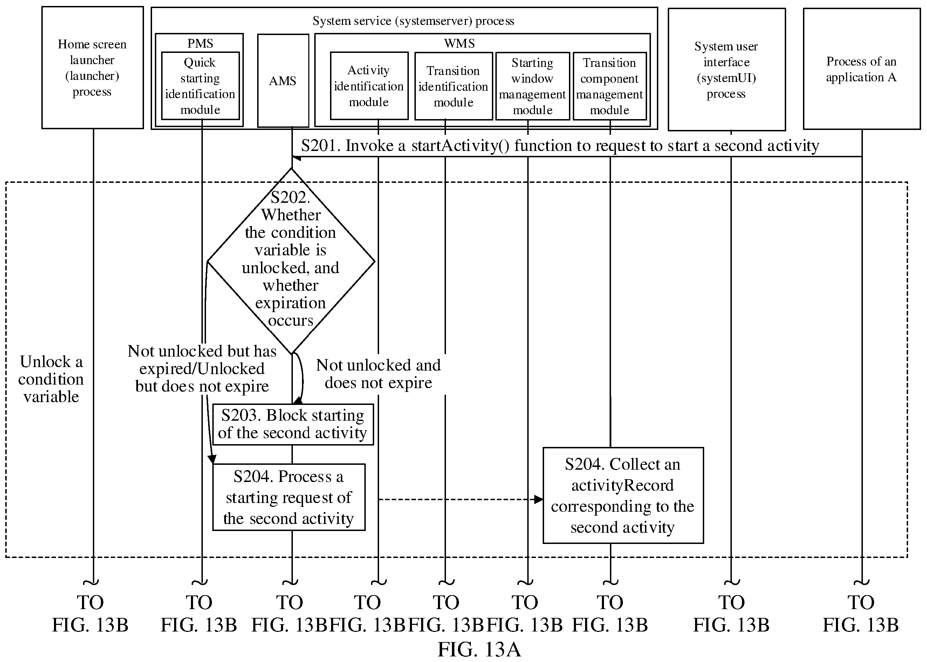

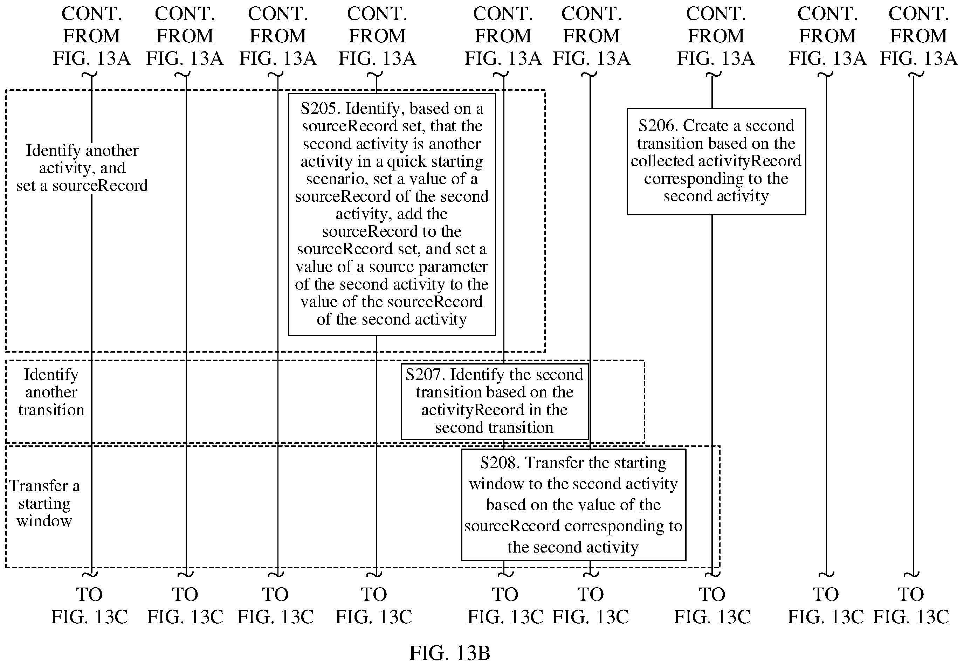

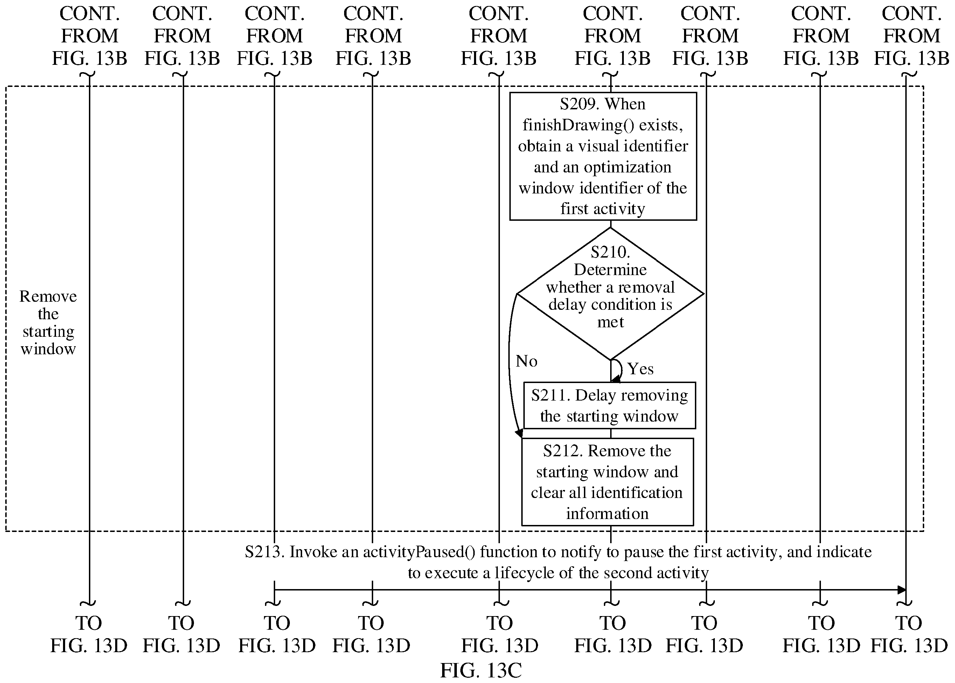

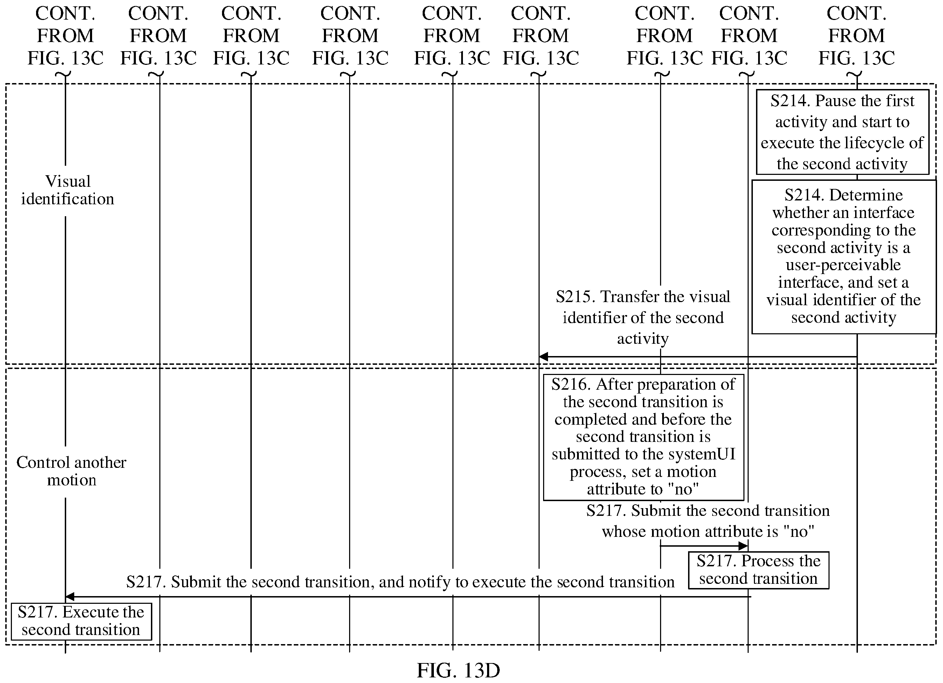

FIG. 12A and FIG. 12B are still other examples of a schematic diagram of a time sequence of an application starting method according to an embodiment of this application. FIG. 13A to FIG. 13D are still other examples of a schematic flowchart of an application starting method according to an embodiment of this application. Referring to FIG. 12A, FIG. 12B, and FIG. 13A to FIG. 13D together, the method includes:
S201: In a process of executing a lifecycle of a first activity, a process of an application A invokes a startActivity() function to request an AMS in a systemserver process to start a second activity.
S202: The AMS in the systemserver process determines, in real time, whether a condition variable is unlocked and whether valid duration of the condition variable expires. If the condition variable is not unlocked and the valid duration of the condition variable does not expire, step S203 is performed. If the condition variable does not expire and the condition variable is unlocked, or the condition variable is not unlocked and the valid duration of the condition variable expires, step S204 is performed.
S203: The AMS in the systemserver process blocks the starting of the second activity.
   Blocking the second activity means not processing the starting request of the second activity.
S204: The AMS in the systemserver process starts to process the starting request of the second activity, and a transition component management module in a WMS of the systemserver process collects an activityRecord corresponding to the second activity.

Steps S202 to S204 may be simply referred to as unlocking the condition variable.

As described in the foregoing step S105, the condition variable may include a condition variable 1 and a condition variable 2. Determining whether to unlock the condition variable means determining whether the two condition variables are both unlocked, that is, determining whether a transition corresponding to the first activity has been submitted to a systemUI process, and completing layer display of the starting window.

Determining whether the valid duration of the condition variable expires means determining whether duration from a current moment to a moment at which the condition variable is set exceeds the valid duration.

If a time difference between the current moment and the moment of the condition variable does not exceed the valid duration of the condition variable, and neither of the two condition variables is unlocked, the starting of the second activity is blocked.

If the time difference between the current moment and the moment of the condition variable does not exceed the valid duration of the condition variable, and both of the two condition variables are unlocked, that is, the condition variables are unlocked within the valid duration, it indicates that starting the second activity of the application A and creating the second transition do not affect display of the transition page, and in this case, the AMS starts to process the starting request of the second activity. This prevents the second activity and the second transition from affecting the processing of the transition page, so that the transition page can be displayed as soon as possible, thereby minimizing a response time of quick starting of the application.

It should be noted that a sequence of unlocking the two condition variables is not limited. The condition variable 1 may be unlocked first, the condition variable 2 may be unlocked first, or the two condition variables may be unlocked at the same time.

If the time difference between the current moment and the moment of the condition variable exceeds the valid duration of the condition variable, and at least one of the two condition variables is not unlocked, the condition variable is automatically unlocked, and the AMS starts to process the starting request of the second activity. This can avoid a case that the condition variable always cannot be unlocked due to abnormal procedure execution, and consequently a subsequent activity always cannot be started, thereby improving system stability.

S205: After the AMS starts to process the starting request of the second activity, an activity identification module in the WMS identifies, based on a sourceRecord set, that the second activity is another (other) activity in the quick starting scenario, uses a first sourceRecord as a value of a sourceRecord of the second activity, and adds the sourceRecord to the sourceRecord set. In addition, a value of a source (from) parameter of the second activity is set to the value of the sourceRecord of the second activity.

This step may be simply referred to as identifying the another activity and setting the sourceRecord.

As described in step S104, the sourceRecord may be used as a basis for identifying the activity. Therefore, if the sourceRecord exists in the sourceRecord set, it indicates that the activity currently requested to be started is a second activity or an activity following the second activity, that is, another activity, in the quick starting scenario.

In this step, when the another activity is identified, on the one hand, a value of a sourceRecord value is transferred to the another activity, and on the other hand, a value of a from parameter of the another activity is changed. The from parameter is a parameter for marking a source of the activity in the native system. To be specific, the value of the from parameter represents an old activity that requests to start a new activity. Different from the sourceRecord in this application, the native system does not have a mechanism for maintaining a starting window across task stacks. Therefore, the from parameter can only be valid for activities in a same task stack. Specifically, if the new activity and the old activity are located in a same task stack, the value of the from parameter is information about the old activity. If the new activity and the old activity are located in different task stacks, the value of the from parameter is NONE, which indicates that the activity does not have a source. In this embodiment, after a sourceRecord of another activity is determined, a value of the sourceRecord of the another activity is written into a from parameter of the another activity. In this way, the value of the from parameter is overwritten, so that in a subsequent procedure, a starting window can also be accurately transferred by using the from parameter, thereby preventing screen flickering or a similar case caused by a failure of transferring a starting window, improving stability of displaying the starting window, and improving visual experience of the user.

S206: The transition component management module in the WMS of the systemserver process creates a second transition based on the collected activityRecord corresponding to the second activity.

S207: The transition identification module in the WMS of the systemserver process identifies the second transition as another transition based on the activityRecord in the second transition.

This step may be simply referred to as identifying the another transition.

The another transition is the second transition or a transition following the second transition.

Specifically, in the foregoing step S203, the activity identification module has identified that the activity currently requested to be started is the another activity. Therefore, the transition component identification module determines whether the activityRecord collected in the current transition is the corresponding activityRecord of the another activity, and may further determine whether the current transition is the another transition.

Optionally, if the transition identification module determines that the current transition is the another transition, an identifier may be added for the current transition, so as to facilitate subsequent searching. An identifier added for another transition may be, for example, "other".

S208: The starting window management module in the WMS of the systemserver process obtains the sourceRecord corresponding to the second activity, and transfers the starting window to the second activity based on the value of the sourceRecord corresponding to the second activity.

This step may be simply referred to as transferring the starting window.

As described in the foregoing step S104, the sourceRecord may be used as a basis for transferring the window. Specifically, in the foregoing step S205, a value has been set for the sourceRecord corresponding to the second activity, and the sourceRecord is added to the sourceRecord set. Therefore, in this step, the value of the sourceRecord corresponding to the second activity can be obtained, and an old activity (namely, a source activity) that starts the activity can be determined based on the value. Referring to the explanation of the foregoing step S104, in most cases, the activity that holds the starting window is the old activity. However, for some cases in which the activity that holds the starting window is not the source activity, when the transferred value is empty, the sourceRecord of the activity that holds the starting window in the sourceRecord set is used as a value of the sourceRecord of the new activity. Therefore, in any case, an activity corresponding to the value of the sourceRecord in the optimization procedure of this application holds a starting window. Therefore, a sourceRecord can be used to accurately obtain an activity that currently holds a starting window, so that the starting window is accurately transferred to a new activity, thereby improving accuracy of transferring the starting window, and improving reliability of an optimization procedure.

In an optional implementation, after another transition is identified and before the starting window is transferred (that is, after step S207 and before step S208), step S205 may be further performed again to identify another activity and set a sourceRecord corresponding to the another activity. In this way, another activity can be further accurately identified, thereby further ensuring correct assignment of a value to the sourceRecord, preventing a failure of subsequently transferring the starting window or a failure of subsequently identifying the activity, and ensuring reliability of the optimization procedure.

In an optional implementation, when the starting window is transferred, it may be further determined whether the starting window is transferred across task stacks, that is, it is determined whether the second activity and the first activity are located in a same task stack. If the second activity and the first activity are not located in the same task stack, the starting window is transferred across task stacks. In this case, a layer level of the starting window may be increased by one level. In this way, when a starting window is successfully added in the native system, the starting window can be prevented from covering the starting window added in the optimization procedure of this solution, that is, the starting window added in the optimization procedure of this solution is prevented from being blocked, thereby preventing impact on an effect of the transition page, and improving user experience.

S209: The process of the application A continues to execute the lifecycle of the first activity. After drawing of a frame of the first activity is completed, a finishDrawing() function is used to indicate to the WMS that drawing of an interface is completed. In response to the indication, the starting window management module in the WMS obtains a visual identifier of the first activity from an activityRecord of the first activity, and obtains an optimization window identifier from the cache.

As described in the foregoing steps S117 and S118, in the activityStart phase of the first activity, a visual identifier is set for the activity, and the visual identifier is transferred to and stored in the activityRecord of the first activity. Therefore, the visual identifier of the first activity can be obtained in this step.

As described in the foregoing steps S112 and S113, the starting window management module identifies that the starting window is the starting window added by using the optimization procedure, and in this case, the optimization window identifier is added for the starting window. Therefore, if the starting window is the starting window transferred by the first activity, the optimization window identifier can be obtained.

S210: The starting window management module determines, based on the visual identifier of the first activity and an obtaining result of the optimization window identifier, whether a removal delay condition is met. If the removal delay condition is met, step S211 is performed. If the removal delay condition is not met, step S212 is performed.

S211: The starting window management module delays removing the starting window.

S212: The starting window management module removes the starting window, and clears all identification information added by using the optimization procedure.

Steps S209 to S212 may be simply referred to as removing the starting window.

The removal delay condition may include at least: The visual identifier of the first activity is "no", and the optimization window identifier exists. To be specific, if the interface corresponding to the first activity is an interface that the user cannot perceive, and the current starting window is the starting window added in the optimization procedure, it indicates that the interface corresponding to the first activity does not need to be displayed, and in this case, removal of the starting window may be delayed.

In another embodiment, the removal delay condition may further include at least one of the following: Removal of the starting window held by the activity has not been delayed, and a current removal delay count threshold is greater than 0. Setting "removal of the starting window held by the activity has not been delayed" in the removal delay condition can prevent removal of a starting window of a same activity from being delayed for a plurality of times, that is, prevent the procedure from always lagging at a same activity, which causes a starting lag, thereby improving user experience.

As described in the foregoing embodiment, when the electronic device is powered on and started, a removal delay count threshold may be obtained by parsing a configuration, and cached into a cache configuration module. It may be understood that, in a cycle of one time of quick starting, each time the WMS delays removing the starting window, the cache configuration module subtracts 1 from the removal delay count threshold until the removal delay count threshold is 0. When the starting window management module needs to determine whether the removal delay condition is met, the starting window management module may obtain the latest removal delay count threshold from the cache configuration module. Setting "removal delay count threshold is greater than 0" in the removal delay condition means that when the removal delay quantity is 0, the removal delay cannot be continued. This can avoid unlimitedly delaying removal of the starting window, and prevent the transition page from being displayed on a screen for a long time, which causes a starting lag, thereby improving user experience.

It may be understood that, in some embodiments, the removal delay condition may further include: It is determined that the sourceRecord exists in the sourceRecord set, and it is determined that the starting window currently exists. It is determined that the sourceRecord exists in the sourceRecord set, which means that it is determined that the current scenario is the quick starting scenario, and the current starting procedure is the optimization procedure. It is determined that the sourceRecord exists in the sourceRecord set, and it is determined that the starting window currently exists. This further enhances the determining of delaying removing a window, improves system reliability, and further improves user experience.

Optionally, when the removal delay condition is met, the window management module may obtain a removal delay time of the starting window from the configuration cache module, and may delay removing the starting window by using a removal delay recall delayRemoveCallback() function, where a time of Callback is from a current moment to a moment of the removal delay time of the starting window. For example, the removal delay time of the starting window is 500 ms. After expiration of 500 ms, the procedure of removing the starting window is restarted. However, within this 500 ms, by performing a subsequent step in the optimization procedure, the starting window may have been transferred to a subsequent activity (refer to step S208). Therefore, removal of the starting window in the Callback procedure fails, which ensures normal execution of the subsequent procedure, and further ensures normal display of the transition page. If the starting window is not transferred out after expiration of 500 ms, the starting window is removed, so as to prevent the transition page from being displayed on the screen for a long time, which causes a starting lag, thereby improving user experience.

On this basis, in a possible implementation, in the foregoing step S208, after the starting window is successfully transferred, if there is a Callback for removing the starting window by delaying removal, the Callback is cancelled. In this way, it is no longer necessary to return to the removal of the starting window, thereby saving a procedure and reducing power consumption.

The removal delay condition is not met, which means that the visual identifier of the current starting window is "yes", or the optimization window identifier does not exist, or removal of the starting window held by the activity has been delayed, or the current removal delay count threshold is equal to 0. In these cases, the starting window is removed normally, so that the interface of the application can be displayed normally, and the operation of the user can be responded normally, thereby ensuring normal switching between the starting window and the application window.

After the starting window is removed, all identification information added by using the optimization procedure is cleared, including but not limited to a shortcut function ID, a sourceRecord set, a condition variable, valid duration of the condition variable, an optimization window identifier, an identifier of each activity, an identifier of each transition, and the like. After the starting window is removed, the system continues to run according to the procedure of the application or the native procedure. Clearing the identification information added in the optimization procedure can prevent the procedure from being confused during subsequent running, and improve stability and reliability of the system. In addition, clearing the identification information added in the optimization procedure can further prevent an error in quickly starting the function of the application next time, and improve reliability of system running.

S213: After determining that the execution of the lifecycle of the first activity is completed, the AMS in the systemserver process invokes the activityPaused() function to notify the process of the application A to pause the first activity, and indicate the process of the application A to execute a lifecycle of the second activity.

S214: The AMS in the systemserver process indicates the process of the application A to pause the first activity, and starts to execute the lifecycle of the second activity. In the process of executing the lifecycle of the second activity, in the activityResume phase, the process of the application A determines whether an interface corresponding to the second activity is a user-perceivable interface, and sets a visual identifier of the second activity based on a determining result.

S215: In the process of executing the lifecycle of the second activity, in a phase of requesting the WMS in the systemserver process to add display (addToDisplay), the process of the application A transfers the visual identifier of the second activity together with a parameter to the WMS, and a starting window management module in the WMS stores the visual identifier in the activityRecord corresponding to the second activity.

Steps S214 and S215 may be simply referred to as visual identification.

Specific execution of steps S214 and S215 is similar to that of the foregoing steps S117 and S118, and details are not described again.

S216: In response to the request of the systemUI process, the WMS in the systemserver process invokes an addToDisplay() function to add display for the starting window. After adding display for the starting window is completed, application readiness (applyReady) is triggered. The transition component management module in the WMS prepares the second transition. After the preparation of the second transition is completed and before the second transition is submitted to the systemUI process, the transition component management module in the WMS of the systemserver process sets a motion attribute of the second transition to "no" (that is, the motion attribute is cancelled).

It may be understood that, in a process of starting the second activity and subsequent activities, the process of the application requests an activity pause (activityPause) from the systemserver process to trigger the WMS to enter an application readiness (applyReady) phase, and then the WMS prepares the transition. In other words, the activityPause triggers transaction readiness (onTransactionReady).

S217: The transition component management module in the WMS submits the second transition whose motion attribute is "no" to the systemUI process for processing. The systemUI process performs processing, and after the processing is completed, submits the second transition whose motion attribute is "no" to the launcher process, notifying the launcher process to execute the second transition. The launcher process executes the second transition to continue to display the transition page.

The foregoing steps S216 and S217 may be simply referred to as controlling another motion.

It may be understood that before each transition following the second transition is submitted to the systemUI process, a motion attribute of the transition is set to "no". In other words, the first transition has a motion attribute, none of the transitions following the first transition has no motion attribute, and the first transition may be a motion of icon enlargement. In this way, a display effect presented on the screen is as follows: The icon is gradually enlarged, and then an interface after enlargement of the icon is retained. Description is provided later with reference to the accompanying drawings. This can prevent screen flickering caused by frequent switching of a motion when an activity is started across task stacks, and improve a display effect. In addition, only the first transition is a motion, and a motion execution time is relatively short, thereby avoiding a case that due to an excessively long motion execution time, loading of an activity of the application is completed, but execution of a motion has not been completed. Therefore, a failure of an interface to respond to a user operation can be avoided, thereby improving user experience.

The foregoing steps S201 to S217 describe the process related to the starting phase of the second activity. It may be understood that each subsequent activity is executed according to the foregoing steps. In this way, the starting window is successively transferred for the second activity and subsequent activities, and a still picture is displayed until a specific activity does not meet the removal delay condition, or loading of the last activity of the application A is completed. Then, the starting window is removed, and a target interface a is displayed.

It should be noted that in the foregoing embodiment, the optimization procedure is described by using cold start as an example. However, the optimization procedure provided in this application is applicable to cold start, warm start, and hot start.

The following describes an interface change process of the first phase and the second phase with reference to the accompanying drawings.

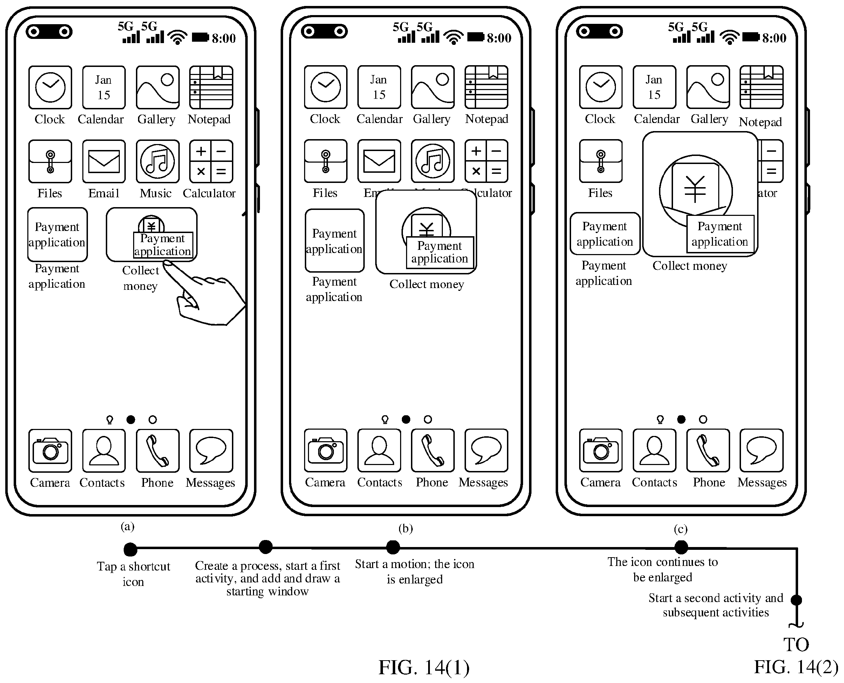

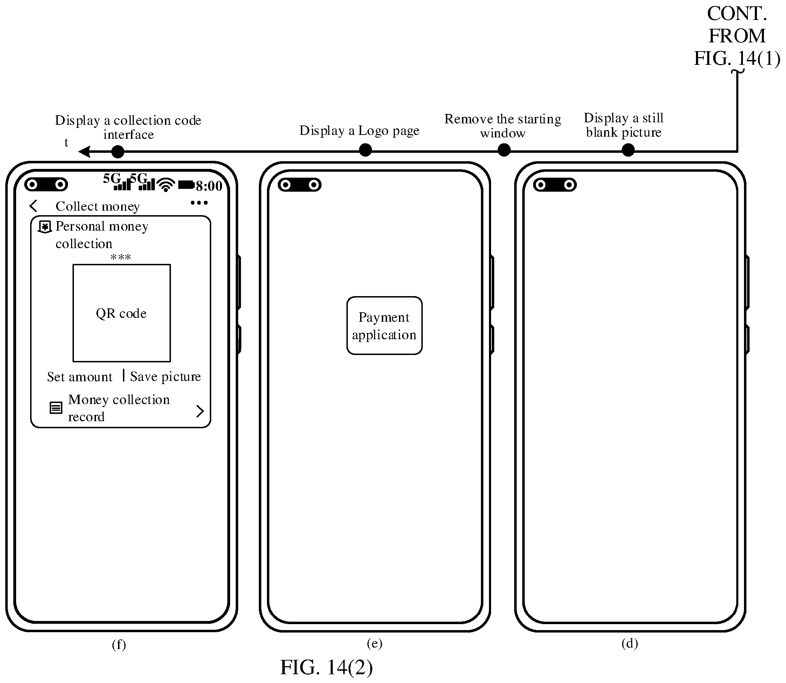

For example, FIG. 14(1) and FIG. 14(2) are examples of a schematic diagram of an interface change according to an embodiment of this application. Quick starting of a money collection function of a payment application is still used as an example. As shown in figure (a) in FIG. 14(1), in response to a user tapping a shortcut icon of the money collection function on a home screen, an electronic device creates a process of the payment application and then starts a first activity of the payment application. In a process of starting the first activity, the electronic device adds a starting window and draws the starting window, and is ready to display a transition page. In an example in which a first transition has a motion attribute, and a motion is icon enlargement, after the drawing of the starting window is completed, the motion is executed, and an effect of icon enlargement is presented on the screen, as shown in figure (b) in FIG. 14(1). Then, the icon continues to be enlarged, as shown in figure (c) in FIG. 14(1), until playing of the motion is completed. The motion attributes of the second transition and the subsequent transitions are cancelled, and therefore the playing of the icon enlargement motion is not affected. In addition, after the playing of the motion is completed, if the loading of the activity is not completed, a still picture such as a blank picture is displayed on the transition page, as shown in figure (d) in FIG. 14(2). Then, preparation of content that needs to be displayed by the payment application is completed, and in this case, the starting window is removed, and an interface of the payment application is displayed, for example, a Logo page of the payment application is displayed, as shown in figure (e) in FIG. 14(2). Then, the interface jumps to a collection code interface, as shown in figure (f) in FIG. 14(2).

It can be seen from FIG. 14(1) and FIG. 14(2) that a preset function of an application can be quickly started by using an optimization procedure, and a transition page can be smoothly and stably displayed in a starting process, without a problem such as screen flickering, thereby effectively improving visual experience of a user.

The following further describes a response time of the optimization procedure.

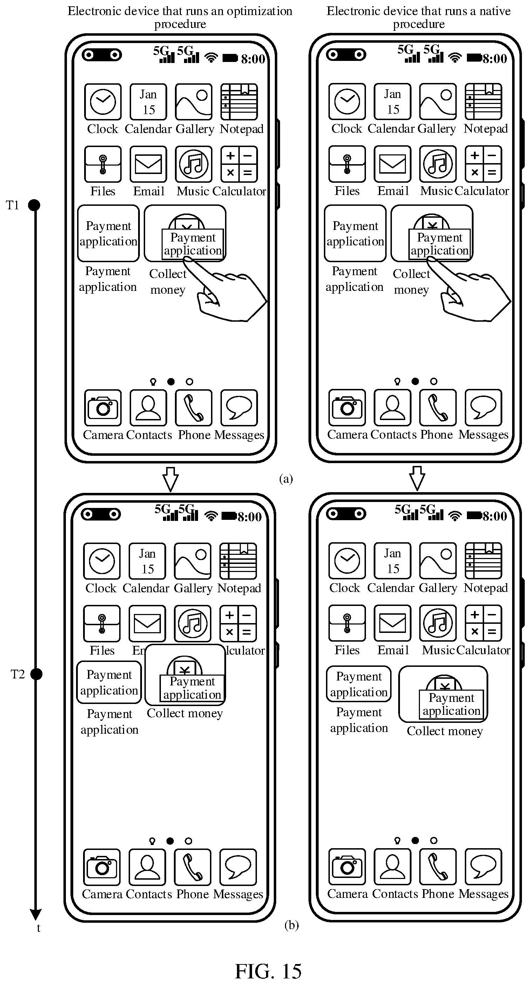

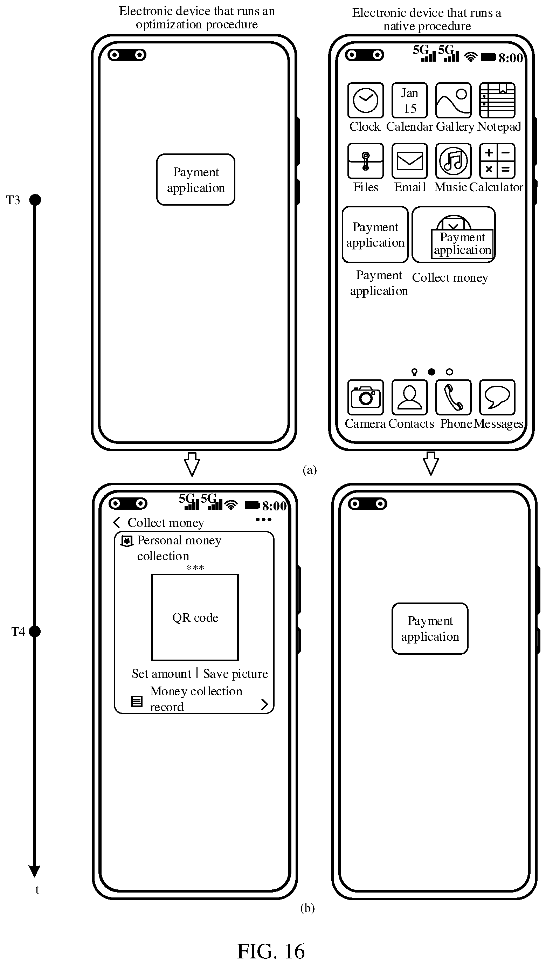

For example, FIG. 15 and FIG. 16 are examples of a schematic diagram of comparison between interfaces for quickly starting an application based on an optimization procedure and a native procedure according to an embodiment of this application. Figure (a) in FIG. 16 (a) is continued from figure (b) in FIG. 15. In each group of subfigures in FIG. 15 and FIG. 16, a subfigure on the left shows an interface of an electronic device that runs an optimization procedure, and a subfigure on the right shows an interface of an electronic device that runs a native procedure. As shown in figure (a) in FIG. 15, at a same moment T1, a payment application is started in a shortcut manner by using the optimization procedure and the native procedure at the same time. As shown in figure (b) in FIG. 15, at a moment T2, the interface of the device that runs the optimization procedure displays a transition page to present an effect of gradually enlarging an icon, whereas the device that runs the native procedure does not respond. As shown in figure (a) in FIG. 16, at a moment T3, the device that runs the optimization procedure has removed a starting window, and has displayed a Logo page of the payment application, whereas the device that runs the native procedure still does not respond. As shown in figure (b) in FIG. 16, at a moment T4, the interface of the device that runs the optimization procedure has displayed an interface of a money collection function, whereas the device that runs the native procedure starts to include and display a Logo page of the payment application.

It can be clearly seen from FIG. 15 and FIG. 16 that the response time of the optimization procedure is greatly shortened. In addition, in the native procedure, there is no motion in the starting process and a visual effect is relatively poor.

In addition, experimental test data also shows that response times of various types of quick starting of various applications in the optimization procedure of this application are greatly reduced. For example, when a payment function of Alipay^{®} is started in a shortcut manner, a response time is shortened to 84 ms. When a scanning function of Alipay^{®} is started in a shortcut manner, a response time is shortened to 80 ms. When a collection/payment function of WeChat^{®} is started in a shortcut manner, a response time is shortened to 90 ms. When a scanning function of WeChat^{®} is started in a shortcut manner, a response time is shortened to 80 ms. It can be learned that, in comparison with a related technology, in the optimization procedure of this application, the response time may be shortened by 537 at most.

In addition, it can be learned from the foregoing descriptions of the first phase and the second phase that, the application starting method provided in this application improves the native procedure on a system side, without a need to change original starting logic of an application program, thereby facilitating maintenance of the optimization procedure and providing high security.

The following describes an update of a function blacklist.

Optionally, in a process of executing the optimization procedure, if the following cases occur, a currently started function may be added to the function blacklist:

If pausing of an old activity precedes requesting to start a new activity, transaction readiness (onTransactionReady) is delayed. The old activity is a second activity or an activity following the second activity.

As described in the foregoing embodiments, in a process of running a specific activity (namely, an old activity), if an activity (namely, a new activity) following the old activity needs to be started, a systemserver process may be requested to start the new activity in a starting (activityStart) phase of the old activity. Then, the systemserver process processes the starting request, and after execution of a lifecycle of the old activity is completed, pauses the old activity and starts the new activity. It can be learned that the requesting to start the new activity precedes the pausing of the old activity.

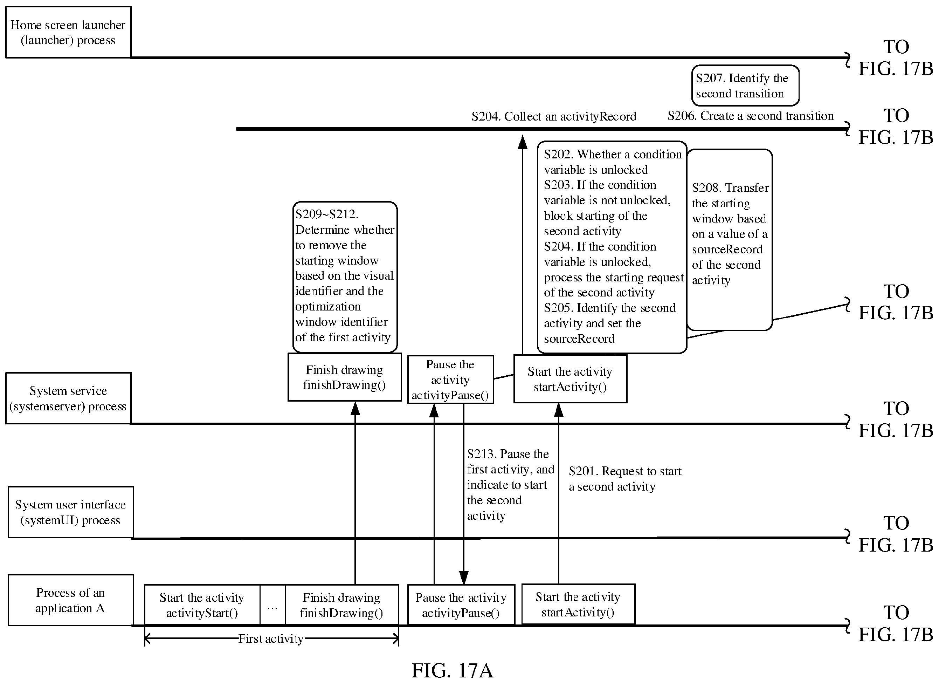

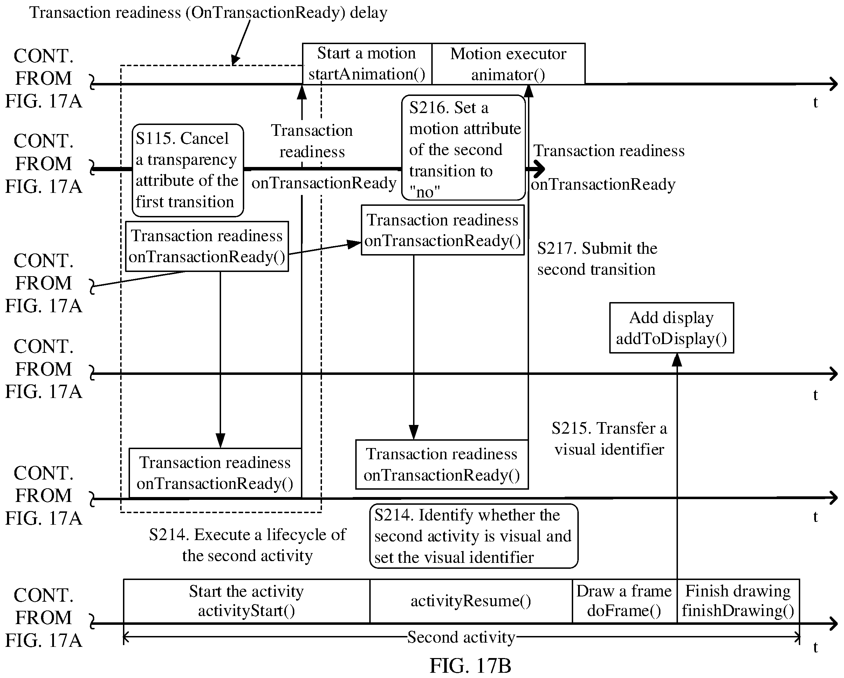

Referring to FIG. 17A and FIG. 17B, however, in actual application, for the second activity and subsequent activities, the process of the application may perform an activity completion (finishActivity) operation on the old activity. After the activity completion operation is performed, the old activity is paused. After that, the new activity may be requested again to be started, causing a case that the requesting to start the new activity follows the pausing of the old activity. In this case, when the old activity is paused, the systemserver process has not been requested to start the new activity, and therefore, an operation of transferring the starting window is not triggered for execution. Therefore, the starting window is still held by the old activity.

After the activity is paused, transaction readiness (onTransactionReady) may be triggered. If the starting window is still held by the old activity when the old activity is paused, the starting window is hidden with the pausing of the old activity, and the starting window is displayed again after being transferred to the new activity, thereby causing screen flickering and affecting user experience.

In view of this, according to the optimization procedure provided in the embodiments of this application, on the one hand, in this scenario, transaction readiness (onTransactionReady) of the transition corresponding to the old activity is delayed, that is, transition readiness transitionReady is delayed. After the old activity requests the systemserver process to start the new activity, and the starting window is transferred, the transaction readiness (onTransactionReady) is executed. In this way, the starting window can be transferred to the next activity when being always displayed, thereby preventing screen flickering and improving user experience. On the other hand, a shortcut function ID of such a scenario is added to the function blacklist. In this way, the function of the application is not allowed to be executed according to the optimization procedure during quick starting next time, thereby further preventing screen flickering and improving system reliability.

The following further summarizes and describes the application starting method provided in the embodiments of this application.

According to the application starting method provided in the embodiments of this application, when it is determined that a current scenario is suitable for quick starting by using an optimization procedure, according to a first aspect, a starting window is added in a process of starting a first activity, so as to display a transition page, thereby shortening a response time. According to a second aspect, when a second activity and subsequent activities are started, the starting window is transferred, so that the transition page is continuously displayed. According to a third aspect, when it is determined that an interface of an application needs to be displayed, the starting window is removed, so as to ensure normal display of the interface of the application.

Therefore, during implementation of the solutions in the foregoing three aspects, an activity in a quick starting scenario needs to be identified, and it is determined whether the activity is the first activity or the second activity and subsequent activities (namely, other activities). In the embodiments of this application, according to a first aspect, a first identifier (which may be, for example, a shortcut function ID) is set, and a quick starting scenario and a first activity are marked, so that the first activity in the quick starting scenario can be accurately and quickly identified, and further a starting window can be accurately added. According to a second aspect, a sourceRecord is set, and a source activity that starts the activity is marked, so that another activity in the quick starting scenario can be accurately and quickly identified, and further the starting window can be accurately transferred. According to a third aspect, a value is assigned to a visual identifier of each activity, and whether an interface corresponding to the activity is visual is marked, so that whether an interface of an application needs to be displayed can be accurately determined, and whether the starting window needs to be removed can be further determined. In addition, a second identifier (which may be, for example, an optimization window identifier) is added for a starting window added in the optimization procedure, and the starting window added in the optimization procedure is marked, so that the starting window is accurately removed when being removed, thereby preventing removal of a starting window added in a native procedure, improving accuracy of procedure running, and further improving stability of system running.

In addition, according to the optimization procedure, a first transition, and a second transition and each subsequent transition (namely, another transition) are further identified. On the one hand, a transparency attribute of the first transition is cancelled. In this way, an icon enlargement motion can be executed, thereby improving a motion effect. On the other hand, a transparency attribute of another transition is cancelled. In this way, screen flickering caused by frequent switching of a motion can be prevented, and a display effect can be improved. In addition, a motion execution time is relatively short, thereby avoiding a case that due to an excessively long motion execution time, loading of an activity of the application is completed, but execution of a motion has not been completed. Therefore, a failure of an interface of an application to respond to a user operation can be avoided, thereby improving user experience.

In addition, according to the optimization procedure, a condition variable is set to limit an occasion for starting the second activity, so as to prevent impact on the loading of the first transition, and prevent impact on display of a transition page.

In summary, according to the application starting method provided in the embodiments of this application, a response time for quick starting of an application can be shortened, and a transition page can be smoothly and stably displayed, thereby improving user experience.

The foregoing describes in detail examples of the application starting method provided in the embodiments of this application. It may be understood that to implement the foregoing functions, the electronic device includes corresponding hardware and/or software modules for performing the functions. A person skilled in the art should be easily aware that the example units and algorithm steps described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

In the embodiments of this application, the electronic device may be divided into functional modules based on the foregoing method examples. For example, the electronic device may be divided into functional modules corresponding to the functions, such as a detection unit, a processing unit, and a display unit; or two or more functions may be integrated into one module. The integrated module may be implemented in a form of hardware, or may be implemented in a form of a software functional module. It should be noted that division into the modules in the embodiments of this application is an example, and is merely logical function division. During actual implementation, there may be another division manner.

It should be noted that all related content of the steps in the foregoing method embodiments may be cited to function description of a corresponding functional module. Details are not described herein again.

The electronic device provided in the embodiments is configured to execute the foregoing application starting method, and therefore can achieve the same effect as the foregoing implementation method.

When an integrated unit is used, the electronic device may further include a processing module, a storage module, and a communication module. The processing module may be configured to control and manage an action of the electronic device. The storage module may be configured to support the electronic device in executing stored program code, data, and the like. The communication module may be configured to support communication between the electronic device and another device.

The processing module may be a processor or controller. The processing module may implement or execute various example logical blocks, modules, and circuits described with reference to content disclosed in this application. The processor may alternatively be a combination that implements a computing function, for example, a combination of one or more microprocessors or a combination of digital signal processing (digital signal processing, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the electronic device used in this embodiment may be a device having the structure shown in FIG. 3.

An embodiment of this application further provides a computer-readable storage medium. The computer-readable storage medium stores a computer program. When the computer program is executed by a processor, the processor is enabled to perform the application starting method in any one of the foregoing embodiments.

An embodiment of this application further provides a computer program product. When the computer program product runs on a computer, the computer is enabled to perform the foregoing related steps to implement the application starting method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the application starting method in the foregoing method embodiments.

The electronic device, the computer-readable storage medium, the computer program product, or the chip provided in the embodiments is configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

It may be understood by a person skilled in the art from the foregoing descriptions of the implementations that, for convenience and brevity of description, division into the foregoing functional modules is merely used as an example for description. In actual application, the foregoing functions may be allocated to different functional modules as required for implementation, that is, an internal structure of the apparatus is divided into different functional modules, to complete all or some of the functions described above.

In the several embodiments provided in this application, it should be understood that the disclosed apparatus and method may be implemented in another manner. For example, the apparatus embodiment described above is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected according to actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An application starting method, applied to an electronic device, wherein the electronic device comprises a system service process, a system interface process, and a home screen process, and the method comprises:
in response to a first operation of a user, sending, by the home screen process, a starting message to the system service process, wherein the starting message is used to indicate to start a first function of a first application in a shortcut manner, an interface corresponding to the first function is an interface displayed after the first application successively loads n activities, and n is an integer greater than 1;
in response to the starting message, starting, by the system service process, a first activity of the n activities, and creating a first transition component, wherein the system interface process adds and draws a first starting window for the first activity in a process of starting the first activity;
in response to readiness of the first transition component, notifying, by the system interface process, the home screen process to execute the first transition component; and
in response to the notification of the system interface process, executing, by the home screen process, the first transition component.

2. The method according to claim 1, wherein a moment at which the first transition component is ready is between a first moment and a second moment, the first moment is a moment at which the first starting window is added, and the second moment is a moment at which drawing of the first starting window is completed.

3. The method according to claim 2, wherein the system interface process adding and drawing a first starting window for the first activity comprises:
invoking, by the system interface process, an addStartingWindow() function to add the first starting window;
invoking, by the system interface process, a doFrame() function to draw a frame of the first starting window;
requesting, by the system interface process after the drawing of the frame of the first starting window is completed, the system service process to add display for the first starting window;
invoking, by the system service process, an addToDisplay() function to add display for the first starting window; and
triggering, by the system service process, the readiness of the first transition component after adding display for the first starting window is completed.

4. The method according to any one of claims 1 to 3, wherein the starting message carries information about the first application, and before the starting, by the system service process, a first activity of the n activities, the method further comprises:
if it is determined that the starting message carries first information, determining, by the system service process based on the information about the first application, whether the first application meets a preset condition, wherein the first information is used to indicate to start the first function in a shortcut manner; and
if it is determined that the first application meets the preset condition, setting, by the system service process, a first identifier, wherein the first identifier is used to indicate that a current scenario is a quick starting scenario, and a currently started activity is the first activity of the application.

5. The method according to claim 4, wherein the preset condition comprises one or more of the following:
a type of the first application is in a preset application whitelist;
a package of the first application is not in a preset package blacklist; and
the first information is not in a function blacklist.

6. The method according to claim 4 or 5, wherein the first identifier is the first information.

7. The method according to any one of claims 4 to 6, wherein before the system interface process adds and draws the first starting window for the first activity, the method further comprises:
determining, by the system service process, that the first identifier exists.

8. The method according to claim 7, wherein the method further comprises:
after the system interface process starts to add the first starting window to the first activity, determining, by the system service process, whether a type parameter of the first starting window is a first type, and determining whether the first identifier exists, wherein the first type represents that no starting window is added; and
if the type parameter of the first starting window is the first type and the first identifier exists, setting, by the system service process, a second identifier for the first starting window; or
if the type parameter of the first starting window is not the first type, and the first identifier exists, determining, by the system service process, whether a first result exists, wherein the first result represents that adding a starting window fails; and
if the first result exists, setting, by the system service process, the second identifier; or
if the first result does not exist, clearing, by the system service process, the first identifier.

9. The method according to claim 8, wherein the method further comprises:
if the type parameter of the first starting window is the first type and the first identifier exists, changing the type parameter of the first starting window to a splash type.

10. The method according to claim 8 or 9, wherein the method further comprises:
in a process of starting the first activity, if it is determined that the first identifier exists, creating, by the system service process, a first source record corresponding to the first activity, using an activity record of the first activity as a value of the first source record, and adding the first source record to a source record set.

11. The method according to claim 10, wherein the electronic device further comprises a process of the first application, and the method further comprises:
in a process of executing a lifecycle of the first activity, determining, by the process of the first application, whether an interface corresponding to the first activity is a visual interface; and
if the interface corresponding to the first activity is a visual interface, setting, by the system service process, a value of a visual identifier of the first activity to a first value.

12. The method according to claim 11, wherein the method further comprises:
in an activity layout phase of the first activity, if it is determined that a custom interface comprises a view, or it is determined that a background layout exists and transparency is not 0, determining, by the process of the first application, that the interface corresponding to the first activity is a visual interface.

13. The method according to claim 11 or 12, wherein the method further comprises:
after a first completion indication of the process of the first application is received, determining, by the system service process, whether a removal delay condition is met, wherein the first completion indication is used to indicate that drawing for the first activity is completed; and
if the removal delay condition is met, delaying, by the system service process, removing the first starting window; or
if the removal delay condition is not met, removing, by the system service process, the first starting window.

14. The method according to claim 13, wherein the removal delay condition comprises: the value of the visual identifier of the first activity is not the first value and the second identifier exists.

15. The method according to claim 14, wherein the removal delay condition further comprises one or more of the following:
the starting window held by the first activity has not been removed;
a current removal delay count threshold is greater than 0; and
a source record exists in the source record set.

16. The method according to any one of claims 13 to 15, wherein after the removing the first starting window, the method further comprises:
clearing the first identifier, the second identifier, the source record set, and the first value.

17. The method according to any one of claims 1 to 16, wherein the first transition component has a motion attribute.

18. The method according to claim 17, wherein a motion corresponding to the first transition component is an icon enlargement motion, and the method further comprises:
before the first transition component is submitted to the system interface process, and when it is determined that the first transition component is a transition component corresponding to the first activity, cancelling, by the system service process, a transparency attribute of the first transition component.

19. The method according to claim 18, wherein the method further comprises:
in the process of starting the first activity, determining, by the system service process based on an activity record that corresponds to the first activity and that is collected in the first transition component, that the first transition component is the transition component corresponding to the first activity.

20. The method according to any one of claims 1 to 19, wherein the electronic device further comprises the process of the first application, and the method further comprises:
in response to the starting of the first activity by the system service process, executing, by the process of the first application, the lifecycle of the first activity;
in the process of executing the lifecycle of the first activity, requesting, by the process of the first application, the system service process to start a second activity of the n activities;
in response to the request of the process of the first application, starting, by the system service process, the second activity and creating a second transition component; and
in a process of starting the second activity, transferring, by the system service process, the first starting window to the second activity.

21. The method according to claim 20, wherein a moment at which the second activity is started is later than the moment at which the first transition component is ready.

22. The method according to claim 21, wherein the moment at which the second activity is started is later than a moment at which layer display of the first starting window is completed.

23. The method according to claim 22, wherein the method further comprises:
in the process of starting the first activity, setting, by the system service process, a condition variable, wherein the condition variable comprises: the first transition component has been submitted to the system interface process, and the layer display of the first starting window has been completed; and
the starting, by the system service process, the second activity comprises:
when it is determined that the condition variable is unlocked, starting, by the system service process, the second activity.

24. The method according to claim 23, wherein the method further comprises:
setting, by the system service process, valid duration in the process of starting the first activity; and
if the condition variable is met within the valid duration from a moment at which the condition variable is set, determining, by the system service process, that the condition variable is unlocked; or
if the condition variable is still not met after expiration of the valid duration from a moment at which the condition variable is set, unlocking, by the system service process, the condition variable.

25. The method according to any one of claims 20 to 24, wherein before the transferring, by the system service process, the first starting window to the second activity, the method further comprises:
in the process of starting the second activity, when it is determined that a source record exists in the source record set, setting, by the system service process, a second source record corresponding to the second activity, and assigning a value to the second source record, wherein the source record is used to represent starting of a previous activity of a third activity, and the third activity is any one of the n activities; and
adding the second source record to the source record set.

26. The method according to claim 25, wherein the assigning a value to the second source record comprises:
transferring, by the system service process, the value of the first source record to the second source record, wherein the first source record is the source record corresponding to the first activity; and
if the transferred value is empty, using, by the system service process, an activity record of a fourth activity as the value of the second source record, wherein the fourth activity is an activity that currently holds the first starting window.

27. The method according to claim 25 or 26, wherein the transferring, by the system service process, the first starting window to the second activity comprises:
obtaining the second source record from the source record set; and
transferring the first starting window from the first activity to the second activity based on the value of the second source record.

28. The method according to any one of claims 20 to 27, wherein the method further comprises:
before the second transition component is submitted to the system interface process, and when it is determined that the second transition component is another transition component, cancelling, by the system service process, a motion attribute of the second transition component, wherein the another transition component is an activity other than the first activity in the n activities.

29. The method according to claim 28, wherein the method further comprises:
in the process of starting the second activity, determining, by the system service process based on an activity record that corresponds to the second activity and that is collected in the second transition component, that the second transition component is the another transition component.

30. The method according to any one of claims 20 to 29, wherein after the transferring, by the system service process, the first starting window to the second activity, the method further comprises:
in the process of starting the second activity, if the first activity and the second activity do not belong to a same task stack, increasing, by the system service process, a layer level of the first starting window by one level.

31. The method according to any one of claims 20 to 30, wherein the method further comprises:
in a process of executing a lifecycle of the second activity, determining, by the process of the first application, whether an interface corresponding to the second activity is a visual interface; and
if the interface corresponding to the second activity is a visual interface, setting, by the system service process, a value of a visual identifier of the second activity to a first value.

32. The method according to any one of claims 20 to 31, wherein the method further comprises:
after a second completion indication is received, determining, by the system service process, whether a removal delay condition is met, wherein the second completion indication is used to indicate that drawing for the second activity is completed; and
if the removal delay condition is met, delaying, by the system service process, removing the first starting window; or
if the removal delay condition is not met, removing, by the system service process, the first starting window.

33. An electronic device, comprising a processor, a memory, and an interface, wherein
the processor, the memory, and the interface cooperate with each other, to enable the electronic device to perform the method according to any one of claims 1 to 32.

34. A computer-readable storage medium, wherein the computer-readable storage medium stores a computer program, and when the computer program is executed by a processor, the processor is enabled to perform the method according to any one of claims 1 to 32.
